# EUROPÄISCHE PATENTANMELDUNG

(11) **EP 0 848 042 A2**
(43) Veröffentlichungstag der Anmeldung: **17.06.1998**
(21) Anmeldenummer: 97121539.7
(22) Anmeldetag: 08.12.1997
(51) Int. Cl.: C09B 62/20, C09B 62/503, C09B 62/02

(54) **Wasserlösliche faserreaktive Farbstoffe, Verfahren zu ihrer Herstellung und ihre Verwendung**

(30) Priorität: 10.12.1996 DE 19651213
(71) Anmelder: DyStar Textilfarben GmbH & Co. Deutschland KG, 60318 Frankfurt am Main (DE)
(72) Erfinder: Hansmann, Wilfried, 51381 Leverkusen (DE); Henk, Hermann, Dr., 51061 Köln (DE); Ehrenberg, Stefan, Dr., 60528 Frankfurt (DE); Reddig, Wolfram, Dr., 51373 Leverkusen (DE)

(57) **Zusammenfassung**

Es werden Farbstoffe beschrieben, die als faserreaktiven Rest den 5,6-Difluorpyrimidin-4-yl-Rest enthalten und zur Herstellung von farbstarken und echten Färbungen auf hydroxy- und/oder carbonamidgruppenhaltigen Materialien, insbesondere Fasermaterialien, wie beispielsweise Cellulosefasermaterialien, Wolle und synthetischem Polyamid, dienen.

## Beschreibung

Die Erfindung liegt auf dem technischen Gebiet der faserreaktiven Farbstoffe.

Die Praxis des Färbens mit faserreaktiven Farbstoffen führt weiterhin zu erhöhten Anforderungen an die Qualität der Färbungen und die Wirtschaftlichkeit des Färbeprozesses, weswegen neue faserreaktive Farbstoffe gewünscht werden, die verbesserte Eigenschaften, nicht nur gute Echtheiten, sondern auch einen hohen Fixiergrad auf dem zu färbenden Material aufweisen. So sind aus der Deutschen Offenlegungsschrift Nr. 4 122 100 und aus den U.S.-Patentschriften Nrs. 5 319 074, 5 340 928, 5 436 324 und 5 538 518 faserreaktive Farbstoffe bekannt, die einen 2,4-Difluorpyrimidin-6-yl-Rest als faserreaktive Komponente enthalten. Diese bekannten Farbstoffe sind wegen der angesprochenen gestiegenen Anforderungen insbesondere hinsichtlich ihres Fixiergrades und der Farbstärke der mit ihnen erhältlichen Färbungen und Drucke verbesserungswürdig.

Mit der vorliegenden Erfindung wurden neue faserreaktive Farbstoffe mit einem 5,6-Difluor-pyrimidin-4-yl-Rest als faserreaktive Gruppe gefunden, die der nachstehend definierten allgemeinen Formel (1)

Fb―Zₙ (1)

entsprechen und sich gegenüber den bekannten Farbstoffen vorteilhaft unterscheiden und Färbungen und Drucke mit hoher Farbstärke liefern.

In der Formel (1) bedeuten:
- Fb: ist der Rest eines sulfogruppenhaltigen Mono-, Dis- oder Polyazofarbstoffes, wie Trisazofarbstoffes, oder Schwermetallkomplex-Mono-, -Dis- oder -Trisazofarbstoffes oder Anthrachinon-, Azomethin-, Phenazin-, Stilben-, Triphenylmethan-, Xanthen-, Thioxanthen-, Nitroaryl-, Naphthochinon-, Pyrenchinon-, Perylentetracarbimid-, Formazan-, Kupferformazan-, Phthalocyanin-, Kupferphthalocyanin-, Nickelphthalocyanin-, Kobaltphthalocyanin-, Aluminiumphthalocyanin- oder Triphendioxazin-Farbstoffes;
- n: ist die Zahl 1, 2 oder 3, bevorzugt 1 oder 2, insbesondere bevorzugt 1;
- Z: ist eine Gruppe der allgemeinen Formel (2) 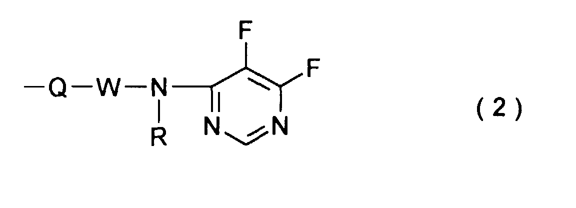 in welcher
- Q: eine kovalente Bindung oder eine Gruppe der Formel 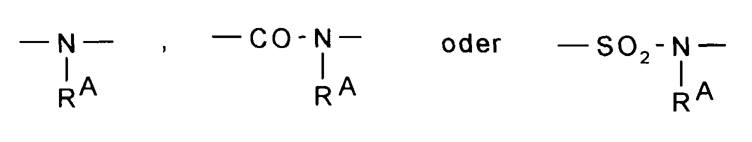 ist, bevorzugt eine Gruppe der Formel -N(R^{A})- oder eine kovalente Bindung, in welchen
- R^{A}: Wasserstoff oder Alkyl von 1 bis 4 C-Atomen, wie Methyl und Ethyl ist, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbethoxy und Carbomethoxy, Carboxy, Sulfamoyl, Sulfo, Sulfato oder Phosphato substituiert sein kann, und bevorzugt Methyl oder Ethyl und insbesondere bevorzugt Wasserstoff ist,
- W: eine kovalente Bindung oder ein Brückenglied ist, wie beispielsweise ein geradkettiger oder verzweigter Alkylenrest von 1 bis 6 C-Atomen oder ein Alkylenrest von 2 bis 8 C-Atomen, der durch 1 oder 2 Heterogruppen aus der Gruppe -NH- , -N(R^{A})- mit R^{A} der obengenannten Bedeutung, -SO₂- , -CO- , -O- , -NH-SO₂- , -SO₂-NH- , -CO-NH- und -NH-CO- unterbrochen ist, oder ein gegebenenfalls substituierter Arylenrest oder ein gegebenenfalls substituierter Arylen-alkylen-Rest oder beispielsweise ein zwei Arylenreste enthaltender Rest, die über eine kovalente Bindung, eine Heterogruppe, wie -NH- oder -O- , oder einen Alkylenrest von 1 bis 4 C-Atomen oder einen olefinischen Rest von 2 bis 4 C-Atomen miteinander verbunden sind, oder beispielsweise der bivalente Rest eines Heterocyclus, wie eines Triazins, an den der bivalente Rest eines gegebenenfalls substituierten Phenylen-amino-, Naphthylen-amino-, Phenylenmethyl-amino- oder (C₁-C₆)-Alkylen-amino-Restes gebunden sein kann, wobei jedoch Q zwingend eine kovalente Bindung bedeutet, falls W für eine kovalente Bindung steht, und
wobei die Aminogruppen -N(R^{A})- und -N(R)- an ein C-Atom des Brückengliedes W oder an ein C-Atom eines Substituenten von W gebunden sind, und
- R: Wasserstoff oder Alkyl von 1 bis 4 C-Atomen, wie Methyl oder Ethyl, ist, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbomethoxy und Carbethoxy, Carboxy, Sulfamoyl, Sulfo, Sulfato oder Phosphato substituiert sein kann, bevorzugt Methyl oder Ethyl und insbesondere bevorzugt Wasserstoff ist.

Arylenreste sind bevorzugt Phenylenreste, die substituiert sein können, wie beispielsweise durch einen oder zwei Substituenten aus der Gruppe Sulfo, Carboxy, Alkyl von 1 bis 4 C-Atomen, wie Ethyl und insbesondere Methyl, Alkoxy von 1 bis 4 C-Atomen, wie Ethoxy und insbesondere Methoxy, Chlor, Hydroxy und Alkanoylamino von 2 bis 4 C-Atomen, wie Propionylamino und Acetylamino, und Naphthylenreste, die substituiert sein können, wie beispielsweise durch 1, 2 oder 3 Sulfogruppen oder durch 1 oder 2 Carboxygruppen oder durch Alkyl von 1 bis 4 C-Atomen, wie Ethyl und Methyl, oder Alkoxy von 1 bis 4 C-Atomen, wie Ethoxy und Methoxy, oder durch zwei oder drei Substituenten aus der Gruppe Alkyl von 1 bis 4 C-Atomen, wie Ethyl und Methyl, Alkoxy von 1 bis 4 C-Atomen, wie Ethoxy und Methoxy, Sulfo und Carboxy.

Alkylenreste sind bevorzugt solche von 1 bis 4 C-Atomen.

Bevorzugt ist Fb der Rest eines Mono- oder Disazofarbstoffes oder der Rest eines Schwermetallkomplex-Azofarbstoffes, wie eines 1:2-Chromkomplex-, 1:2-Kobaltkomplex- und insbesondere eines o,o'-1:1-Kupferkomplex-Monoazo- oder -Disazofarbstoffes, oder der Rest eines Anthrachinon- oder Kupferformazan- oder eines Nickel-, Kupfer- oder Aluminium-Phthalocyaninfarbstoffes oder eines Triphendioxazinfarbstoffes.

Der Farbstoffrest Fb besitzt eine oder mehrere, wie 2 bis 6, Sulfogruppen. Der Rest Fb kann weitere bei organischen Farbstoffen übliche Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Alkanoylaminogruppen von 2 bis 5 C-Atomen, wie die Acetylamino- und Propionylaminogruppe; gegebenenfalls durch Sulfo, Carboxy, Methyl, Ethyl, Methoxy, Ethoxy und/oder Chlor substituierte Benzoylaminogruppen; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-(C₁-C₄-Alkyl)-N-phenylamino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl- sulfamoyl-, Ureido-, Hydroxy-, Carboxy-, Sulfomethyl- und Sulfogruppen. Der Farbstoffrest Fb kann weiterhin eine oder zwei faserreaktive Gruppen der allgemeinen Formel Y-SO₂-W^{O}- besitzen, in welcher W^{O} einen Alkylenrest von 1 bis 4 C-Atomen oder eine Aminogruppe der Formel -N(CH₃)-oder -N(C₂H₅)- oder eine Gruppe der Formel -(C₂-C₄-alkylen)-NH- bedeutet oder für eine direkte kovalente Bindung steht und Y Vinyl ist oder β-Sulfatoethyl, β-Thiosulfatoethyl, β-Phosphatoethyl, β-(C₂-C₅-Alkanoyloxy)-ethyl, wie β-Acetyloxyethyl, β-Benzoyloxyethyl, β-(Sulfobenzoyloxy)-ethyl, β-(p-Toluolsulfonyloxy)-ethyl oder β-Halogenoethyl, wie β-Bromethyl oder β-Chlorethyl ist, und bevorzugt Vinyl und insbesondere bevorzugt β-Chlorethyl oder β-Sulfatoethyl ist.

Brückenglieder W sind insbesondere 1,2-Ethylen, 1,3-Propylen, 1,4-Butylen, 1,2-Propylen, 1,3-Butylen, geradkettiges Alkylen von 2 bis 6 C-Atomen und verzweigtes Alkylen von 3 bis 6 C-Atomen, die jeweils durch 1 oder 2 Heterogruppen unterbrochen sind, welche aus den Gruppen der Formeln -O- , -CO- , -SO₂- , -NH- , -N(R^{A})- mit R^{A} einer der obengenannten Bedeutungen, -NH-CO- , -CO-NH- , -SO₂-NH- und -NH-SO₂- ausgewählt sind, Phenylen, das durch 1 oder 2 Substituenten aus der Gruppe Sulfo, Carboxy, Methyl, Ethyl, Methoxy und Ethoxy substituiert sein kann, wie beispielsweise Phen-1,3-ylen, Phen-1,4-ylen, 6-Sulfo-phen-1,3-ylen, 6-Sulfo-phen-1,4-ylen, 3,6-Disulfo-phen-1,4-ylen, 6-Methoxy-phen-1,3-ylen oder Benzyliden, das durch 1 oder 2 Substituenten aus der Gruppe Sulfo, Carboxy, Methyl, Ethyl, Methoxy und Ethoxy substituiert sein kann, wie beispielsweise 1,4-Benzyliden, 1,3-Benzyliden, 2-Sulfo-phen-1-yl-4-methylen, 2-Sulfo-phen-1-ylen-5-methylen und 2-Methoxy-phen-1-yl-4-methylen, des weiteren der Rest des 1,1-Di-phen-4,4'-ylens, das in jedem Phenylenrest durch Methyl, Methoxy oder Sulfo substituiert sein kann, oder ist der 1,1'-Stilben-4,4'-ylen-Rest, der in jedem Phenylenrest durch Methyl, Methoxy oder Sulfo substituiert sein kann, weiterhin ein Rest der allgemeinen Formel (a) 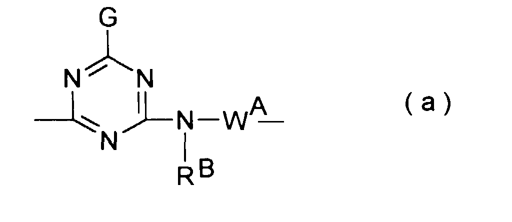 in welcher
- G: Fluor, Chlor, Brom, Cyanoamino, gegebenenfalls substituiertes Amino, Hydroxy, Alkoxy von 1 bis 4 C-Atomen, wie Methoxy und Ethoxy, Phenoxy, gegebenenfalls durch 1 oder 2 Substituenten aus der Gruppe Sulfo, Carboxy, Methyl, Ethyl, Methoxy und Ethoxy substituiertes Phenoxy oder Alkylthio von 1 bis 4 C-Atomen, wie Methylthio und Ethylthio, bevorzugt jedoch Chlor oder Fluor, ist,
- R^{B}: Wasserstoff oder Alkyl von 1 bis 4 C-Atomen, wie Methyl und Ethyl, ist, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbethoxy und Carbomethoxy, Carboxy, Sulfamoyl, Sulfo, Sulfato oder Phosphato substituiert sein kann, und bevorzugt Methyl oder Ethyl und insbesondere bevorzugt Wasserstoff ist, und
- W^{A}: geradkettiges Alkylen von 2 bis 6 C-Atomen oder verzweigtes Alkylen von 3 bis 6 C-Atomen ist, die jeweils durch eine oder zwei Heterogruppen unterbrochen sein können, welche aus den Gruppen der Formeln -O- , -CO- , -SO₂-, -NH- , -N(R^{A})- mit R^{A} einer der obengenannten Bedeutungen, -NH-CO- , -CO-NH- , -SO₂-NH- oder -NH-SO₂- ausgewählt sind, oder Phenylen ist, das durch 1 oder 2 Substituenten aus der Gruppe Sulfo, Carboxy, Methyl, Ethyl, Methoxy und Ethoxy substituiert sein kann, wie beispielsweise Phen-1,3-ylen, Phen-1,4-ylen, 6-Sulfo-phen-1,3-ylen, 6-Sulfo-phen-1,4-ylen, 3,6-Disulfo-phen-1,4-ylen, 6-Methoxy-phen-1,3-ylen oder Benzyliden, das durch 1 oder 2 Substituenten aus der Gruppe Sulfo, Carboxy, Methyl, Ethyl, Methoxy und Ethoxy substituiert sein kann, wie beispielsweise 1,4-Benzyliden, 1,3-Benzyliden, 2-Sulfo-phen-1-yl-4-methylen, 2-Sulfo-phen-1-yl-5-methylen oder 2-Methoxy-phen-1-yl-4-methylen.

In den vorstehenden und in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , in welchen
- M: Wasserstoff oder ein Alkalimetall, wie Natrium, Kalium oder Lithium, oder das Moläquivalent eines Erdalkalimetalls, wie des Calciums, und bevorzugt Wasserstoff oder ein Alkalimetall ist.

Wichtige Azofarbstoffe entsprechend der allgemeinen Formel (1) sind solche, in denen Fb den Rest eines sulfogruppenhaltigen Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet. Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (3a), (3b), (3c) und (3d)

D¹ - N = N - (E - N = N)ᵥ - K² - Z (3a)

Z - D² - N = N - (E - N = N)ᵥ - K¹ (3b)

Z - D² - N = N - (E - N = N)ᵥ - K² - Z (3c)

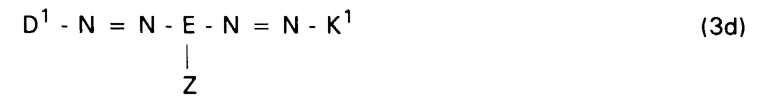

und die davon abgeleiteten Schwermetallkomplex-Verbindungen, wie 1:1-Kupferkomplex-Verbindungen, in welchen
- D¹: der Rest einer Diazokomponente der Benzol- oder Naphthalinreihe ist,
- D²: der Rest einer Diazokomponente der Diaminobenzol- oder Diaminonaphthalin-Reihe ist,
- E: der Rest einer Mittelkomponente der Benzol- oder Naphthalinreihe bedeutet,
- K¹: der Rest einer Kupplungskomponente der Benzol-, Naphthalin-, Pyrazolon, 6-Hydroxypyridon(2)- oder Acetessigsäurearylamid-Reihe ist,
- K²: der bivalente Rest einer Kupplungskomponente der Anilin-, Aminonaphthalin-, Acetessigsäure-(aminoaryl)-amid- oder 1-Aminophenylpyrazolon-Reihe ist,
wobei D¹, D², E, K¹ und K² einen oder mehrere der für Fb genannten Substituenten enthalten kann und die Reste D¹, D², E, K¹ und K² zusammen mindestens eine, bevorzugt mindestens zwei, Sulfogruppen besitzen,
- v: die Zahl Null oder 1 ist und
- Z: eine Gruppe der allgemeinen Formel (2) obiger Bedeutung ist.

Bevorzugt sind weiterhin Disazofarbstoffe der allgemeinen Formeln (3e) und (3f)

D¹ - N = N - K^{o} - N = N - D² - Z (3e)

Z - D² - N = N - K^{o} - N = N - D² - Z (3f)

in welchen Z, D¹ und D² die obengenannten Bedeutungen haben und K^{o} den Rest einer bivalenten Kupplungskomponente der Naphthalinreihe darstellt, wobei D¹, D² und K^{o} die für Fb genannten Substituenten enthalten können und D¹, D² und K^{o} zusammen mindestens eine Sulfogruppe enthalten.

Azofarbstoffe der allgemeinen Formeln (3d) und (3e) sind insbesondere Farbstoffe der allgemeinen Formel (3g) 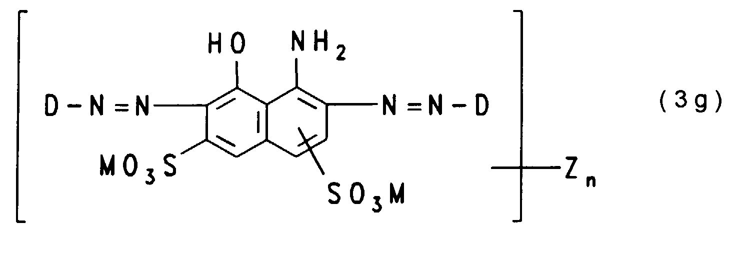 in welcher
- n: die obengenannte Bedeutung besitzt,
- M: für Wasserstoff oder Alkalimetall, wie Natrium, Kalium oder Lithium, oder das Moläquivalent eines Erdalkalimetalls, wie des Calciums, bedeutet,
- Z: für einen Rest der allgemeinen Formel (2) steht, der im Falle von n gleich 1 an einem der Reste D steht und im Falle von n gleich 2 an beide D gebunden ist, und
- D: jedes die Bedeutung von D¹ oder D² in Abhängigkeit davon, ob an D der Rest Z gebunden ist, hat.

Von den 1:1-Kupferkomplex-Azofarbstoffen sind beispielsweise solche der allgemeinen Formel (3h) und (3i) 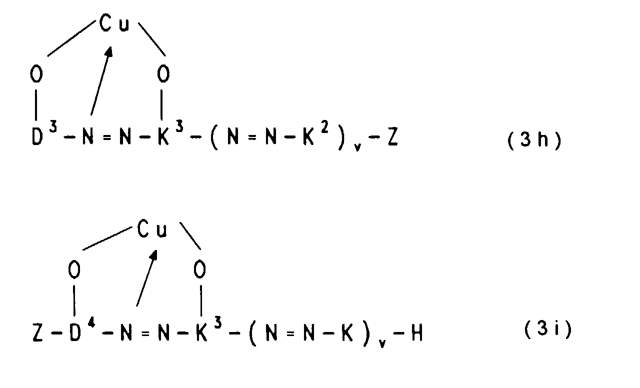 hervorzuheben, in welchen
- Z, K² und v: die obengenannten Bedeutungen haben,
- D⁴: für den Rest einer Diazokomponente steht, die in ortho-Stellung zur Azogruppe die kupferkomplexbindende Oxygruppe enthält, und
- K³: für den Rest einer Kupplungskomponente steht, die in ortho-Stellung oder vicinaler Stellung zur Azogruppe die kupferkomplexbindende Oxygruppe besitzt, und
- K: den bivalenten Rest einer Kupplungskomponente bedeutet.

Aromatische Reste von Diazokomponenten, die keine faserreaktive Gruppe der Formel (2) tragen, wie von solchen, die den allgemeinen Formeln D¹-NH₂ bzw. D³-NH₂ entsprechen, sind beispielsweise solche der allgemeinen Formeln (4a), (4b), (5a) und (5b) 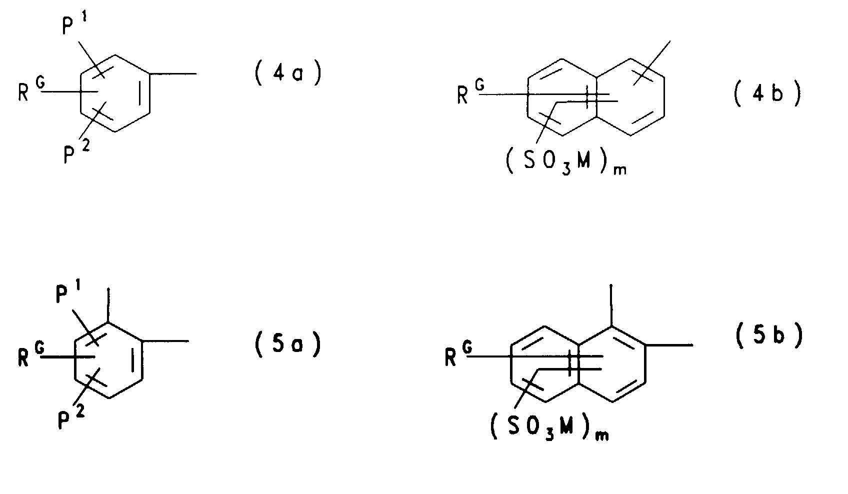 in welchen
- R^{G}: Wasserstoff, Sulfo oder eine Gruppe der Formel Y-SO₂-W^{o}- mit W^{o} und Y der obigen Bedeutung ist,
- P¹: Wasserstoff, Methyl, Ethyl, Methoxy, Ethoxy, Alkanoyl von 2 bis 5 C-Atomen, wie Acetyl und Propionyl, Cyano, Sulfo, Carboxy, Alkoxycarbonyl von 2 bis 5 C-Atomen, wie Methoxycarbonyl und Ethoxycarbonyl, Carbamoyl, N-(C₁-C₄-Alkyl)-carbamoyl, Fluor, Chlor, Brom oder Trifluormethyl ist,
- P²: Wasserstoff, Methyl, Ethyl, Methoxy, Ethoxy, Cyano, Nitro, Carboxy, Sulfo, Chlor, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-(C₁-C₄-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,
wobei der Benzolkern in Formeln (4a) und (4b) zusätzlich in ortho-Stellung zur freien Bindung, die an die Azogruppe führt, eine Hydroxygruppe enthalten kann,
- m: die Zahl Null, 1 oder 2 bedeutet (wobei diese Gruppe im Falle von m gleich Null ein Wasserstoffatom bedeutet) und
- M: die obengenannte Bedeutung hat.

Bevorzugt ist hiervon P¹ gleich Wasserstoff, Methyl, Methoxy, Brom, Chlor, Sulfo und Carboxy sowie P² gleich Wasserstoff, Methyl, Methoxy, Chlor, Carboxy, Sulfo und Acetylamino.

Gruppen der allgemeinen Formeln (4a) und (4b) sind beispielsweise:
Phenyl, 2-Methyl-phenyl, 3- und 4-Methyl-phenyl, 2-Methoxy-phenyl, 3- und 4-Methoxy-phenyl, 2-Chlor-phenyl, 3- und 4-Chlor-phenyl, 2,5-Dichlor-phenyl, 2,5-Dimethyl-phenyl, 2-Methoxy-5-methyl-phenyl, 2-Methoxy-4-nitro-phenyl, 4-Phenyl-phen-1-yl, 3-Phenoxy-phenyl, 2-Sulfamoyl-phenyl, 3- und 4-Sulfamoyl-phenyl, 2-, 3- und 4-(N-Methyl-sulfamoyl)-, -(N-Ethyl-sulfamoyl)-, -(N,N-Dimethyl-sulfamoyl)- und -(N,N-Diethyl-sulfamoyl)-phenyl, 2-Sulfo-5-trifluormethyl-phenyl, 2-Nitro-phenyl, 3- und 4-Nitro-phenyl, 3-Acetylamino-phenyl, 4-Acetylamino-phenyl, 2-Carboxy-phenyl, 4-Carboxy-phenyl, 3-Carboxy-phenyl, 3-Chlor-6-carboxy-phenyl, 2-Sulfo-phenyl, 3-Sulfo-phenyl, 4-Sulfo-phenyl, 2,5-Disulfo-phenyl, 2,4-Disulfo-phenyl, 3,5-Disulfo-phenyl, 2-Methyl-5-sulfo-phenyl, 2-Methoxy-5-sulfo-phenyl, 2-Methoxy-4-sulfo-phenyl, 2-Sulfo-5-methyl-phenyl, 2-Methyl-4-sulfo-phenyl, 3-Sulfo-4-methoxy-phenyl, 5-Sulfo-2-ethoxy-phenyl, 4-Sulfo-2-ethoxy-phenyl, 2-Carboxy-5-sulfo-phenyl, 2-Carboxy-4-sulfo-phenyl, 2,5-Dimethoxy-4-sulfo-phenyl, 2,4-Dimethoxy-5-sulfo-phenyl, 2-Methoxy-5-methyl-4-sulfo-phenyl, 2-Sulfo-4-methoxy-phenyl, 2-Sulfo-4-methyl-phenyl, 2-Methyl-4-sulfo-phenyl, 2-Chlor-4-sulfo-phenyl, 2-Chlor-5-sulfo-phenyl, 2-Brom-4-sulfo-phenyl, 2,6-Dichlor-4-sulfo-phenyl, 2-Sulfo-4- und -5-chlor-phenyl, 2-Sulfo-4,5-dichlor-phenyl, 2,5-Dichlor-6-sulfo-phenyl, 2,5-Dichlor-4-sulfo-phenyl, 2-Sulfo-5-chlor-4-methyl-phenyl, 2-Sulfo-4-chlor-5-methyl-phenyl, 2-Sulfo-5-methoxy-phenyl, 2-Methoxy-5-sulfo-phenyl, 2-Methoxy-4-sulfo-phenyl, 2,4-Dimethoxy-6-sulfo-phenyl, 2-Sulfo-5-acetylamino-4-methyl-phenyl, 2-Methyl-4,6-disulfo-phenyl, 2,5-Disulfo-4-methoxy-phenyl, 2-Sulfo-5-nitro-phenyl, 2-Sulfo-4-nitro-phenyl, 2,6-Dimethyl-3-sulfo-phenyl, 2,6-Dimethyl-4-sulfo-phenyl, 3-Acetylamino-6-sulfo-phenyl, 4-Acetylamino-2-sulfo-phenyl, 4-Sulfo-naphth-1-yl, 3-Sulfo-naphth-1-yl, 5-Sulfo-naphth-1-yl, 6-Sulfo-naphth-1-yl, 7-Sulfo-naphth-1-yl, 8-Sulfo-naphth-1-yl, 3,6-Disulfo- und 5,7-Disulfo-naphth-1-yl, 3,7-Disulfo-naphth-1-yl, 3,6,8-Trisulfo-naphth-1-yl, 4,6,8-Trisulfo-naphth-1-yl, 5-Sulfo-naphth-2-yl, 6- oder 8-Sulfo-naphth-2-yl, 3,6,8-Trisulfo-naphth-2-yl, 1,5,7-Trisulfo-naphth-2-yl, 1,7-Disulfo-naphth-2-yl, 5,7-Disulfo-naphth-2-yl, 2,5,7-Trisulfo-naphth-1-yl, 4,6,8-Trisulfo-naphth-2-yl, 6,8-Disulfo-naphth-2-yl, 1,6-Disulfo-naphth-2-yl, 1-Sulfo-naphth-2-yl, 1,5-Disulfo-naphth-2-yl, 3,6-Disulfo-naphth-2-yl, 4,8-Disulfo-naphth-2-yl, 2-Hydroxy-5-sulfo-phenyl, 2-Hydroxy-4-sulfo-phenyl, 2-Hydroxy-3,5-disulfo-phenyl, 2-Hydroxy-5-acetylamino-3-sulfo-phenyl, 2-Hydroxy-3-acetylamino-4-sulfo-phenyl, 2-Hydroxy-5-chlor-4-sulfo-phenyl, 2-Hydroxy-5-methylsulfonyl-phenyl, 2-Hydroxy-6-nitro-4-sulfo-naphth-1-yl und 1-Hydroxy-4,8-disulfo-naphth-2-yl, 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(β-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4- oder -5-(β-sulfatoethylsulfonyl)-phenyl, 2-Chlor-4- oder -5-(β-chlorethylsulfonyl)-phenyl, 2-Hydroxy-5-(β-sulfatoethylsulfonyl)-phenyl, 2-Hydroxy-3-sulfo-5-(β-sulfatoethylsulfonyl)-phenyl, 3- oder 4-(β-Acetoxyethylsulfonyl)-phenyl, 6-Carboxy-1-sulfo-naphth-2-yl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl, 5-(β-Sulfatoethylsulfonyl)-1-sulfo-naphth-2-yl, 8-(β-Sulfatoethylsulfonyl)-6-sulfo-naphth-2-yl, 4-[N-Methyl-N-(β-sulfatoethylsulfonyl)]-amino-phenyl, 3-[N-Methyl-N-(β-sulfatoethylsulfonyl)]-amino-phenyl, 4-[β-(β'-Sulfatoethylsulfonyl)-ethyl]-phenyl, 3- oder 4-[β-(β'-Chlorethylsulfonyl)-ethylamino]-phenyl, 3- oder 4-[β-(β'-Sulfatoethylsulfonyl)-ethylamino]-phenyl, 3- oder 4-[γ-(β'-Chlorethylsulfonyl)-propylamino]-phenyl, 3- oder 4-[γ-(β'-Sulfatoethylsulfonyl)-propylamino]-phenyl, 3- oder 4-[γ-(Vinylsulfonyl)-propylamino]-phenyl, 4-[β-(β'-Sulfatoethylsulfonyl)-ethylamino]-2- oder -3-sulfo-phenyl, 4-[β-(β'-Chlorethylsulfonyl)-ethylamino]-2- oder -3-sulfo-phenyl, 4-[γ-(β'-Sulfatoethylsulfonyl)-propylamino]-2- oder -3-sulfo-phenyl, 4-[γ-(β'-Chlorethylsulfonyl)-propylamino]-2- oder -3-sulfo-phenyl, 4-[β-(β'-Chlorethylsulfonyl)-ethylamino]-2-carboxy-phenyl, 4-[β-(β'-Sulfatoethylsulfonyl)-ethylamino]-2-carboxy-phenyl, 4-[γ-(β'-Chlorethylsulfonyl)-propylamino]-2-carboxy-phenyl und 4-[γ-(β'-Sulfatoethylsulfonyl)-propylamino]-2-carboxy-phenyl.

Gruppen entsprechend den allgemeinen Formelresten D-N = N-E- bzw. D¹-N = N-E- sind beispielsweise 4-(4'-Sulfo-phenyl)-azo-2-sulfo-phenyl, 4-(2',4'-Disulfo-phenyl)-azo-2-methoxy-5-methyl-phenyl, 4-(2',5'-Disulfo-phenyl)-azo-2-methyl-5-methoxy-phenyl, 4-(3',6',8'-Trisulfo-naphth-2'-yl)-azo-3-ureido-phenyl, 4-(4',8'-Disulfo-naphth-2'-yl)-azo-3-acetylamino-phenyl, 7-(1',5'-Disulfo-naphth-2'-yl)-azo-6-sulfo-8-hydroxy-naphth-3-yl und 4-(4'-Sulfo-phenyl)-azo-6-sulfo-naphth-1-yl, 4-[4'-(β-Sulfatoethylsulfonyl)-phenyl]-azo-2-methyl-5-methoxy-phenyl, 4-[3'-(β'-Sulfatoethylsulfonyl)-phenyl]-azo-3-methyl-phenyl, 4-[4'-(β-Sulfatoethylsulfonyl)-phenyl]-azo-3-ureido-phenyl, 4-[6'-(β-Sulfatoethylsulfonyl)-naphth-2'-yl]-azo-3-ureido-phenyl, 7-[2'-Methoxy-5'-(β-sulfatoethylsulfonyl)-phenyl]-azo-8-hydroxy-6-sulfo-naphth-3-yl, 4-(2',5'-Disulfo-phenyl)-azo-6- oder -7-sulfo-naphth-1-yl, 4-(2',4'-Disulfo-phenyl)-azo-6- oder -7-sulfo-naphth-1-yl, 4-(4',8'-Disulfo-naphth-2'-yl)-azo-6- oder -7-sulfo-naphth-1-yl, 4-(3',6',8'-Trisulfo-naphth-2'-yl)-azo-6- oder -7-sulfo-naphth-1-yl und 4-(4',6',8'-Trisulfo-naphth-2'-yl)-azo-6- oder -7-sulfo-naphth-1-yl.

Aromatische Reste Z-D²- von als Diazokomponenten dienenden Verbindungen der allgemeinen Formel Z-D²-NH₂ oder von deren Diaminobenzol- und Diaminonaphthalin-Verbindungen entsprechend den allgemeinen Formel H₂N-D²-NH₂ sind bevorzugt Reste der allgemeinen Formeln (6a) und (6b) 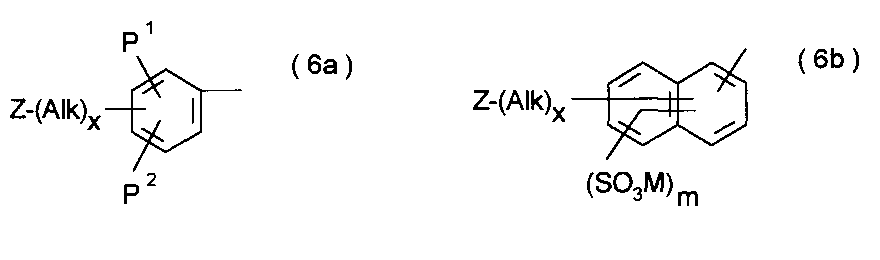 in welchen Z, M, m, P¹ und P² die oben angegebenen, insbesondere bevorzugten Bedeutungen haben, Alk gleich Alkylen von 1 bis 3 C-Atomen, bevorzugt Methylen, ist, und x für die Zahl Null oder 1 steht, wobei der jeweilige Benzolkern in ortho-Stellung zur freien Bindung, die zur Azogruppe führt, zusätzlich eine Hydroxygruppe enthalten kann.

Aromatische Reste E einer kupplungsfähigen und diazotierbaren Verbindung der allgemeinen Formel H-E-NH₂ sind beispielsweise solche der allgemeinen Formeln (7a), (7b) und (7c) 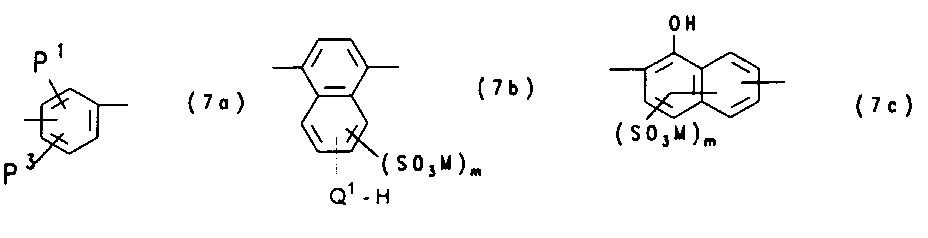 in welchen
- P¹, M und m: die oben angegebenen Bedeutungen haben,
- Q¹: eine Gruppe der Formel -Q-W-N(R)- mit Q, W und R der obengenannten, insbesondere bevorzugten, Bedeutungen ist, und
- P³: Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen oder ein Rest der Formel -Q¹-H mit Q¹ der oben angegebenen Bedeutung, bevorzugt hiervon die Gruppe -NH- , ist.

Reste K¹ von Kupplungskomponenten der allgemeinen Formel H-K¹ , die keine faserreaktive Gruppe der Formel (2) tragen, sind beispielsweise solche der allgemeinen Formeln (8a) bis (8h) 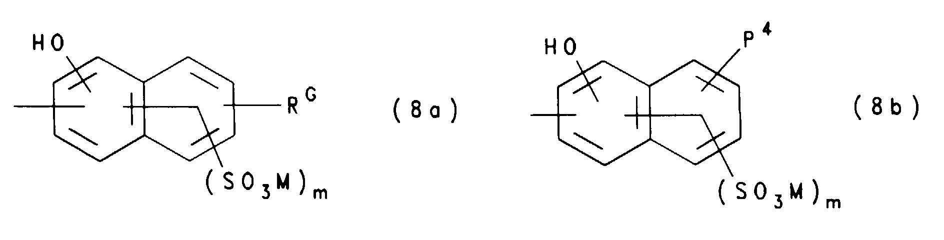 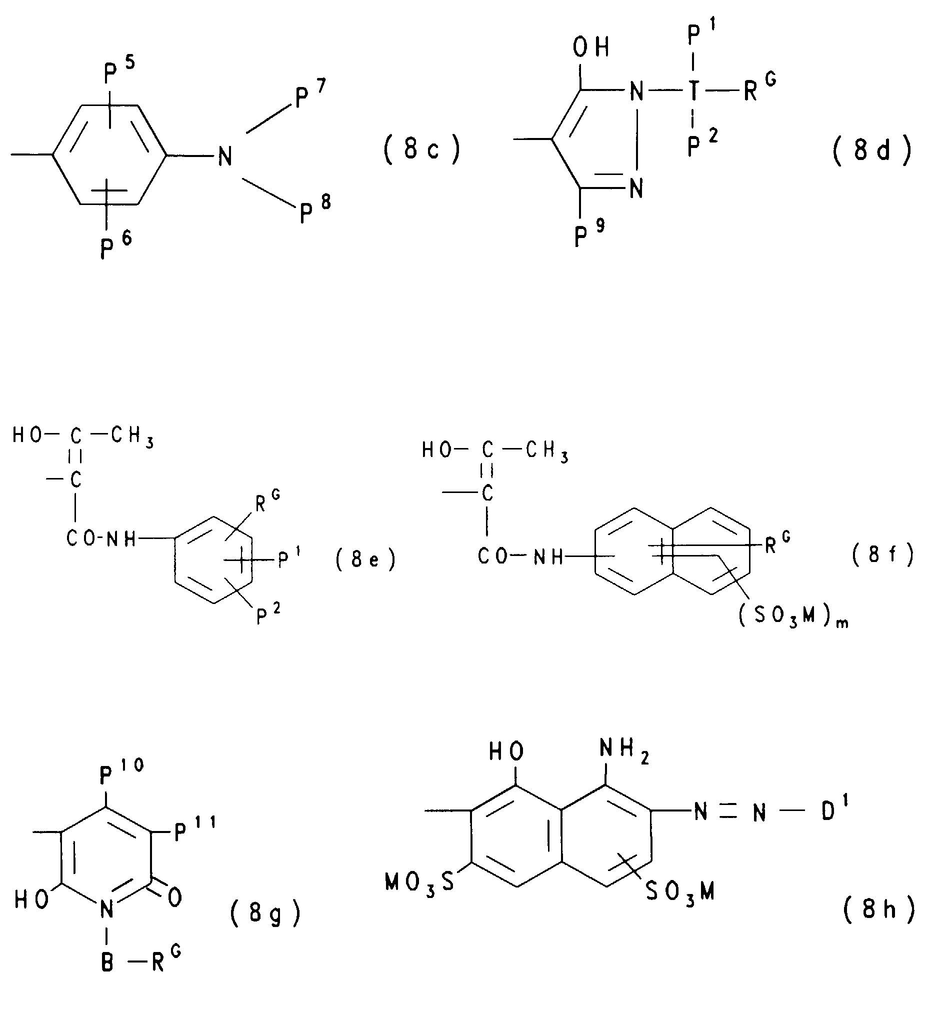 in welchen
- R^{G}, P¹, P², m und M: die obengenannten Bedeutungen haben,
- P⁴: Alkanoylamino von 2 bis 5 C-Atomen, wie Propionylamino und insbesondere Acetylamino, oder Phenylureido ist, das im Phenylrest durch Substituenten aus der Gruppe Chlor, Methyl, Methoxy, Sulfo und Carboxy und/oder durch eine Gruppe -SO₂-Y mit Y einer der obigen Bedeutungen substituiert sein kann, oder Benzoylamino ist, das im Phenylrest durch Substituenten aus der Gruppe Chlor, Methyl, Methoxy, Nitro, Sulfo und Carboxy und/oder durch eine Gruppe -SO₂-Y mit Y einer der obigen Bedeutungen substituiert sein kann,
- P⁵: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Sulfo ist,
- P⁶: Wasserstoff, Alkyl von 1 bis 4 C-Atomen, wie Methyl und Ethyl, Alkoxy von 1 bis 4 C-Atomen, wie Methoxy und Ethoxy, Chlor, Alkanoylamino von 2 bis 7 C-Atomen, wie Acetylamino und Propionylamino, Ureido oder Phenylureido ist,
- P⁷: Wasserstofff oder Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann,
- P⁸: Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist,
- P⁹: Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist
- T: für einen Benzol- oder Naphthalinring, bevorzugt Benzolring, steht,
- P¹⁰: Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen oder Phenyl ist, bevorzugt Alkyl von 1 bis 4 C-Atomen oder Phenyl ist,
- P¹¹: Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,
- B: Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und
- D¹: ein Rest der allgemeinen Formel (4a) oder (4b) ist.

Reste -K²-Z von Kupplungskomponenten der allgemeinen Formel H-K²-Z (bzw. deren entsprechenden Amino-Ausgangsverbindungen der Formeln H-K²-N(R^{A})H oder H-K²-Q-W-N(R)H, wenn hier Z als Gruppe -N(R^{A})H oder -N(R)H steht, in welche der faserreaktive Rest der Formel (2a) 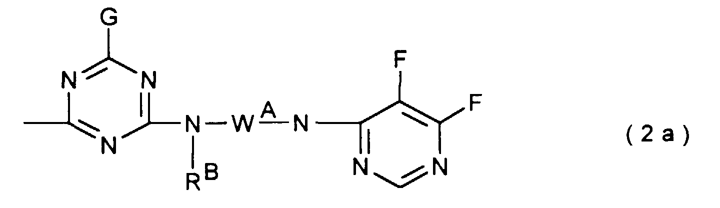 mit G, R^{B}, W^{A} und R der obengenannten Bedeutung oder der 5,6-Difluor-pyrimidin-4-yl-Rest nachträglich eingeführt werden muß) sind beispielsweise Reste der allgemeinen Formeln (9a) bis (9h) 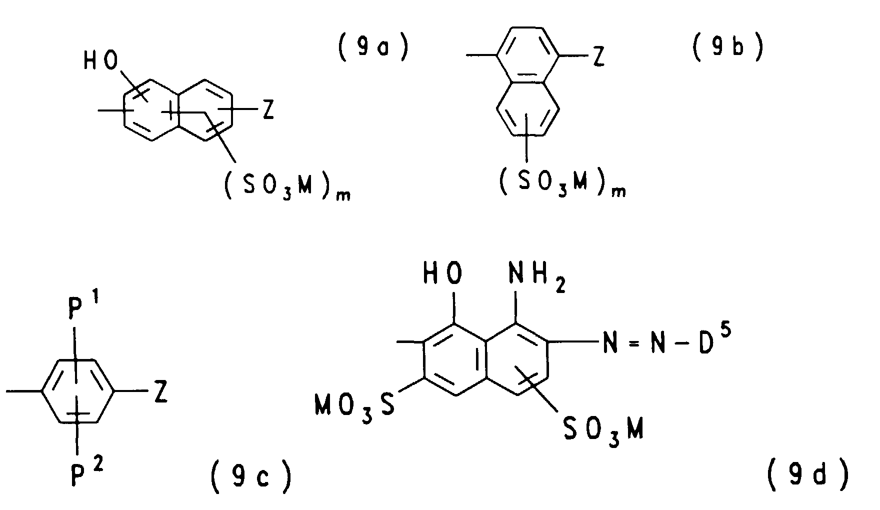 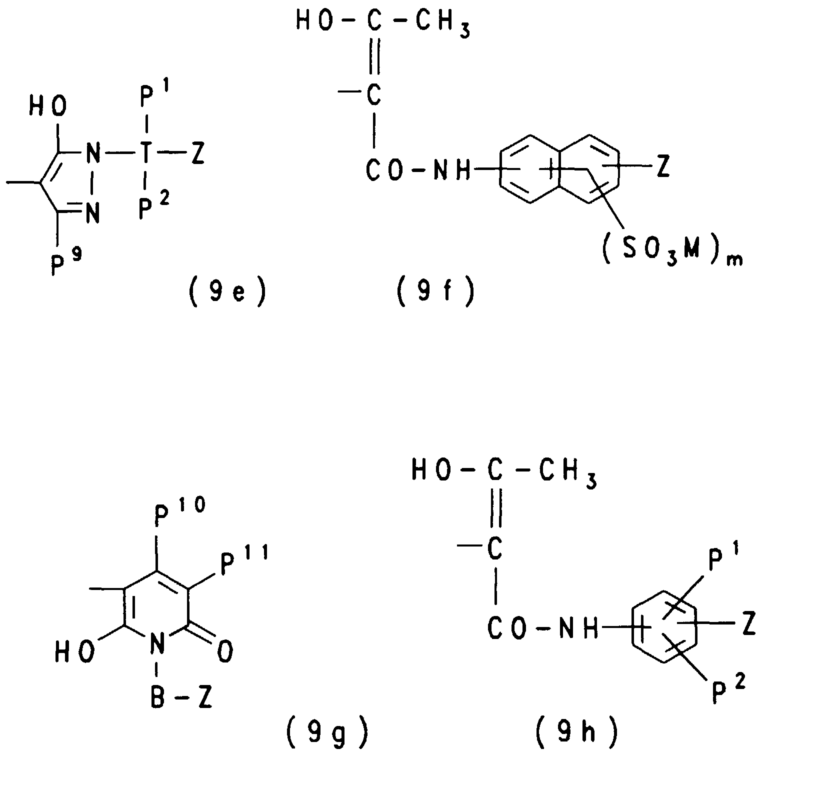 in welchen
- P¹, P², P⁹, P¹⁰, P¹¹, B, T, M, m und Z: die oben angegebenen, insbesondere bevorzugten, Bedeutungen haben und
- D⁵: als Rest einer Diazokomponente ein Rest der obengenannten und definierten allgemeinen Formel (6a) oder (6b) ist.

In den obigen Formeln (8a), (8b) und (9a) steht die freie Bindung, die zur Azogruppe führt, in ortho-Stellung zur Hydroxygruppe an den aromatischen Kern gebunden.

Reste K³ in den Formeln (3h) und (3i) mit einem metallkomplex-bindenden Sauerstoffatom sind insbesondere solche der Formeln (10a) bis (10e) 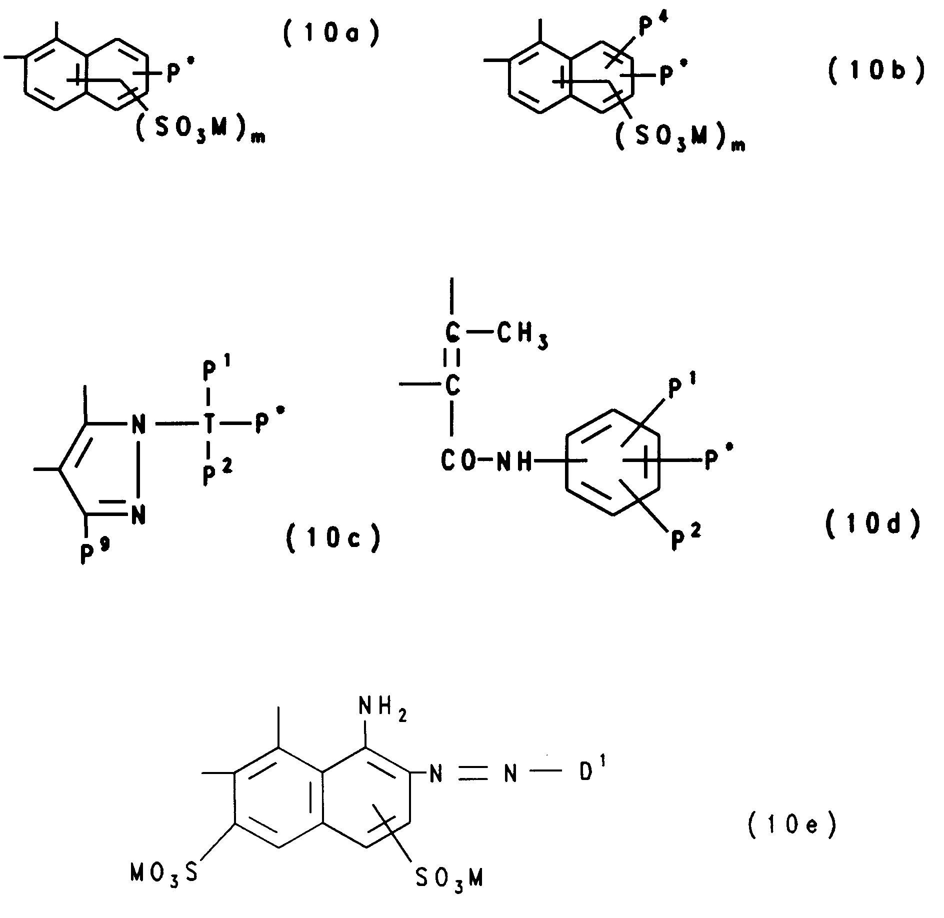 in welchen die einzelnen Formelglieder eine der obengenannten Bedeutungen haben und
- P*: Wasserstoff oder ein Rest Z oder eine Gruppierung der Formel -N=N-K²-Z oder -N=N-K-H mit K², Z und K der obengenannten Bedeutung ist.

Von den Azofarbstoffen sind weiterhin bevorzugt solche, die den allgemeinen Formeln (11A) bis (11Z), (11AA) und (11AB) 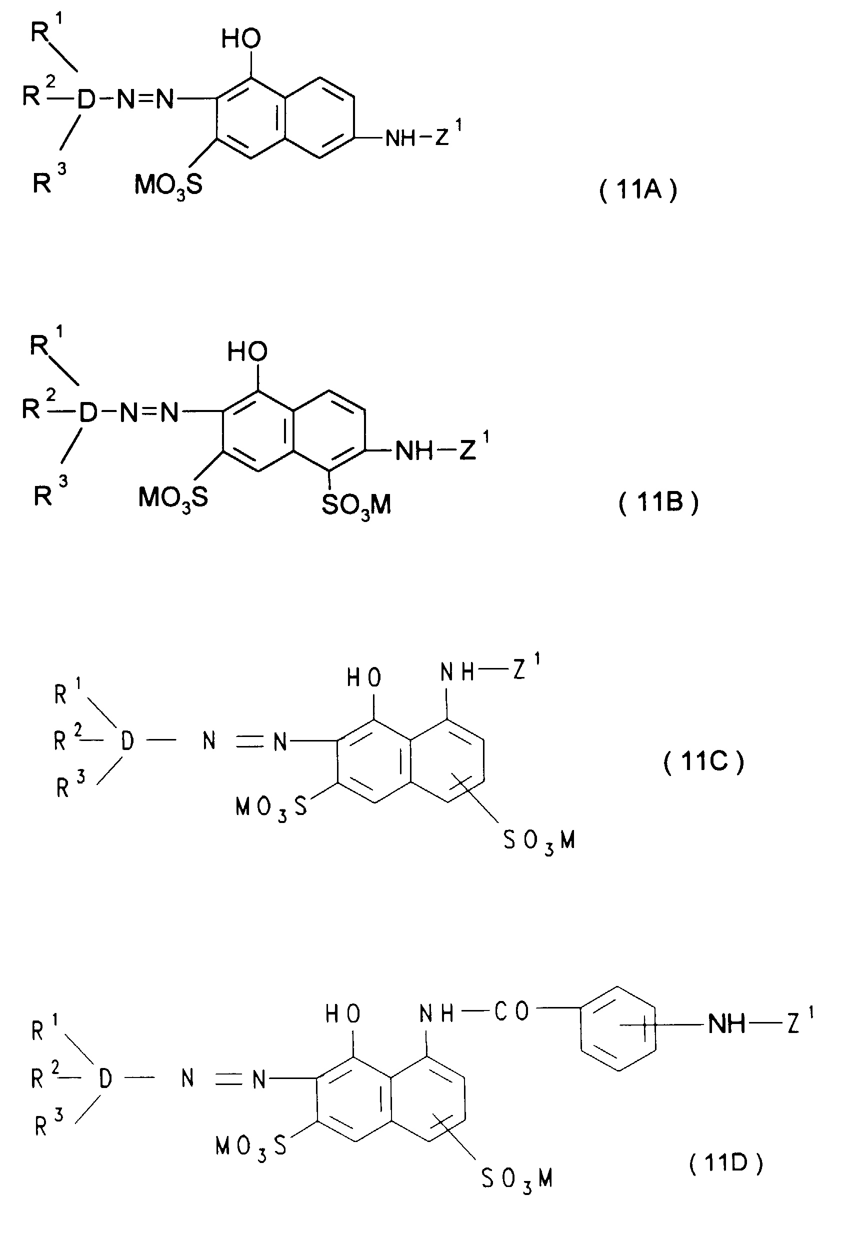 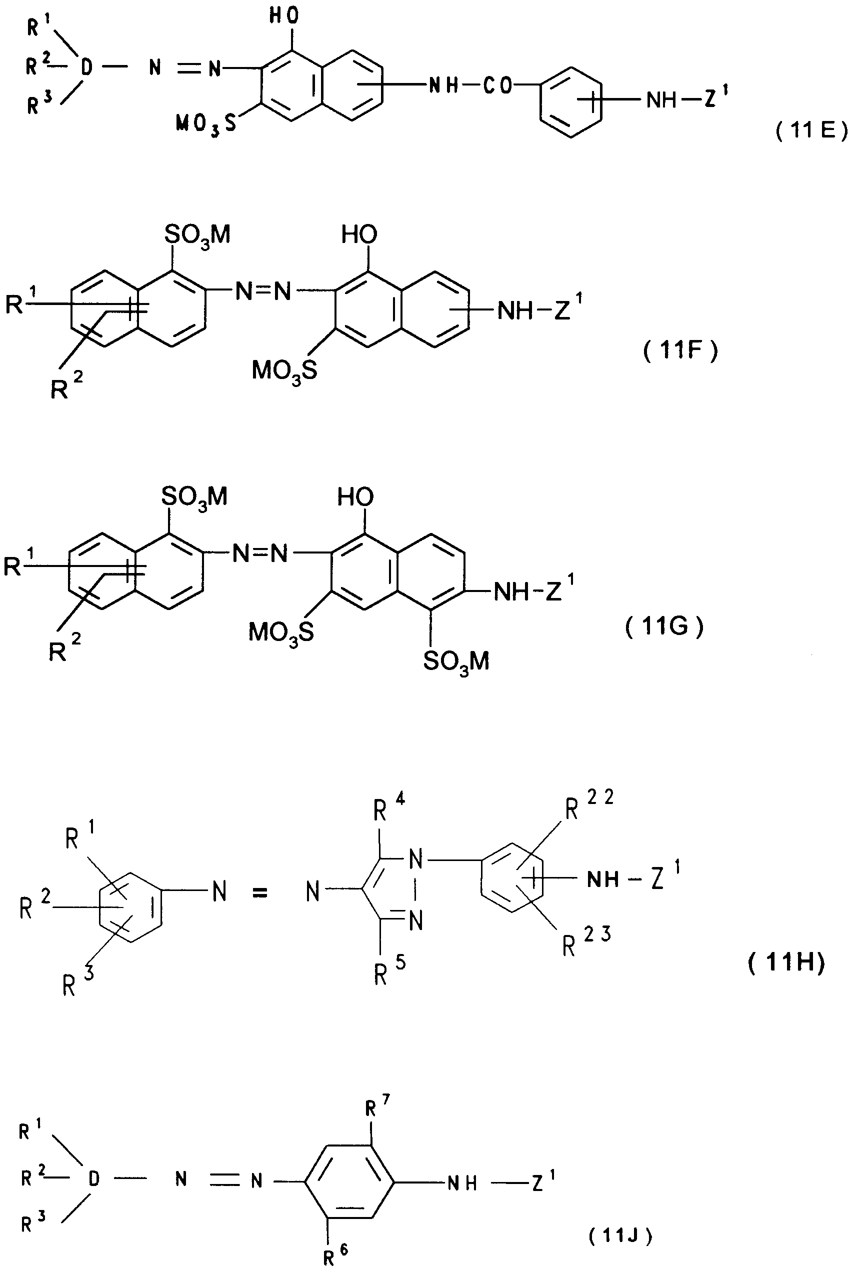 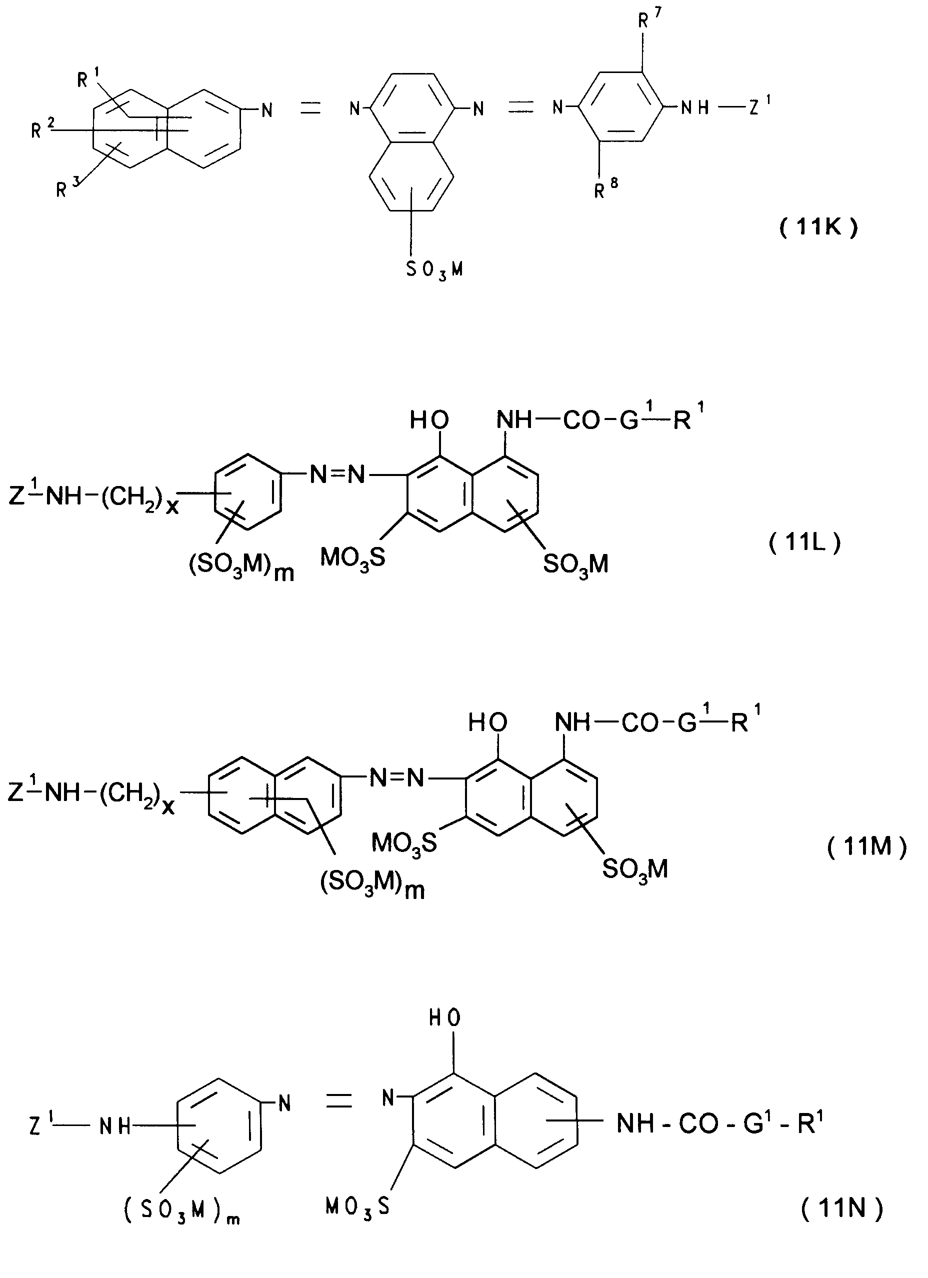 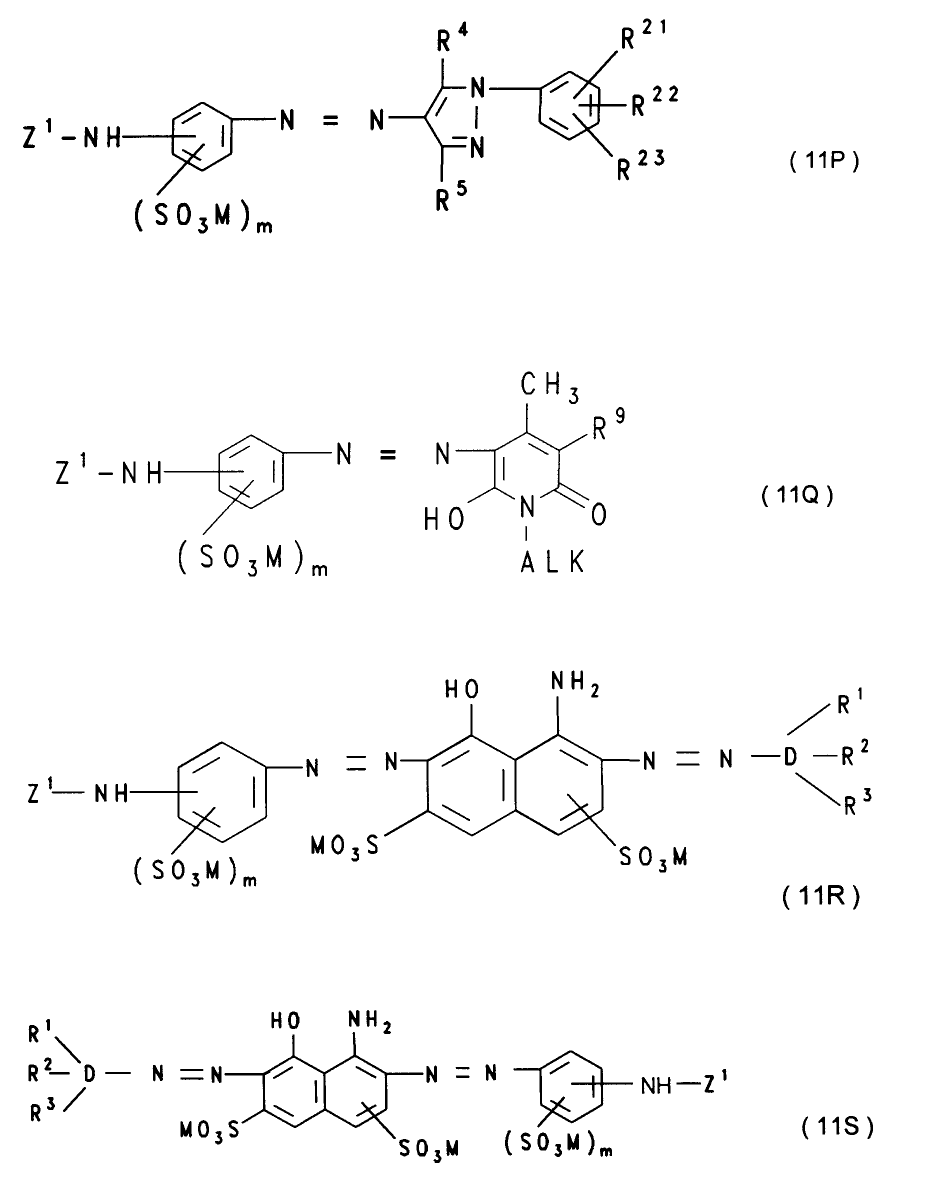 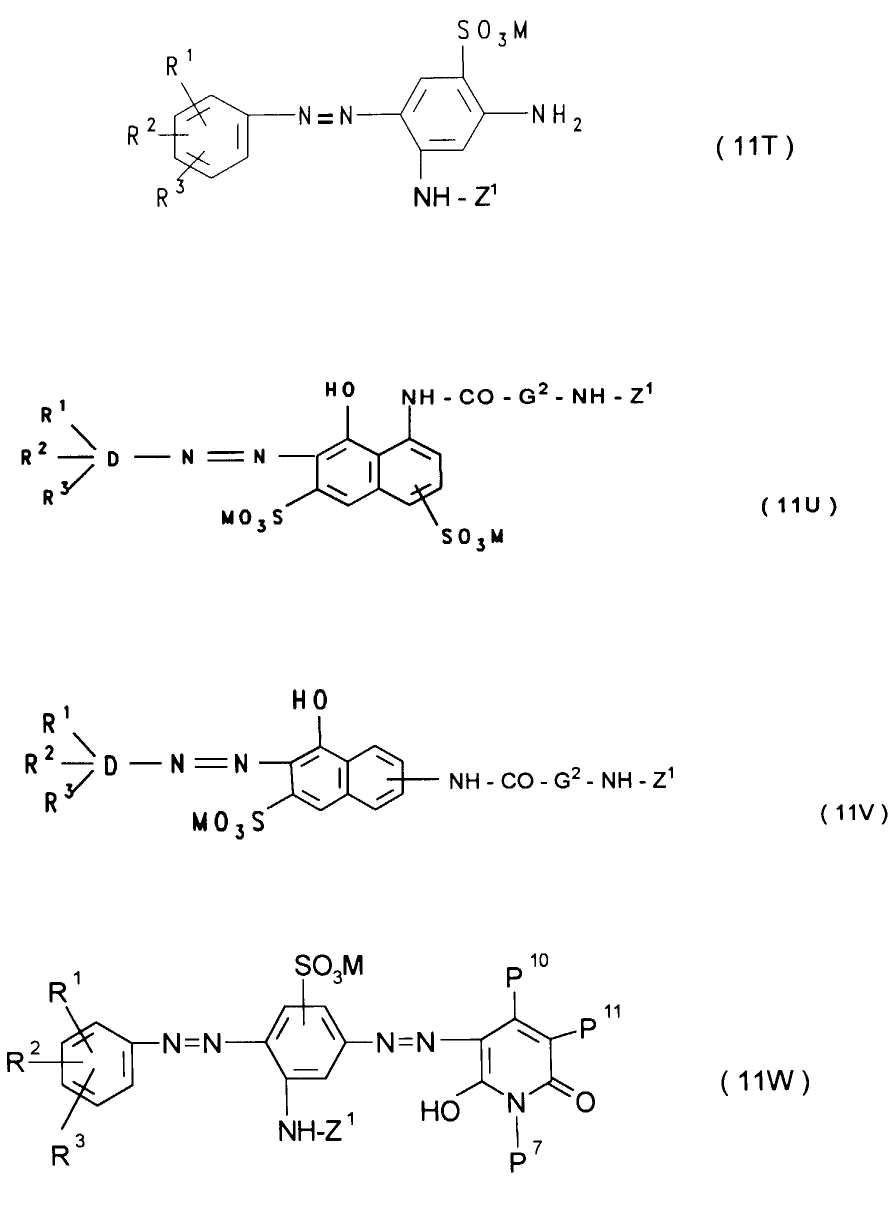 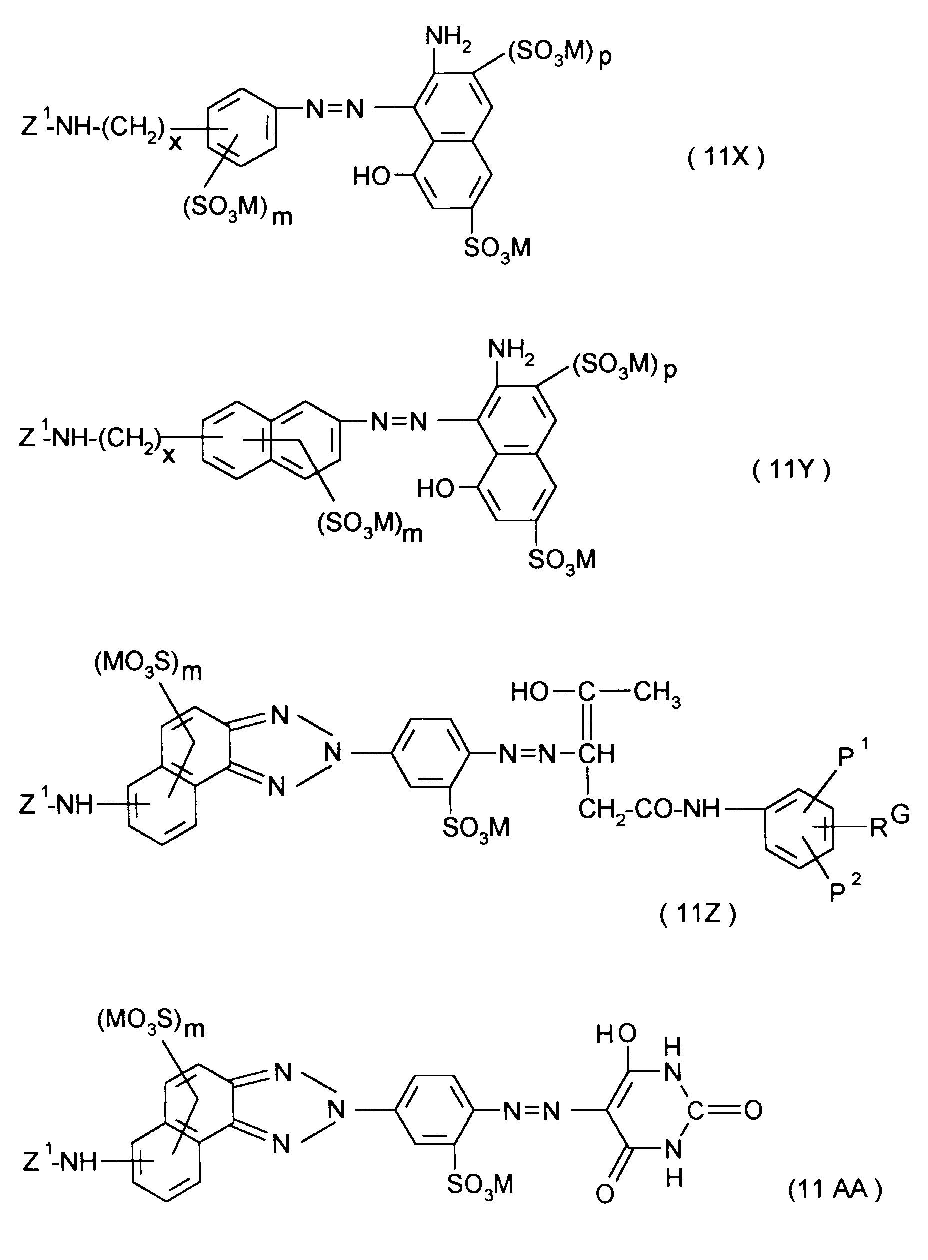 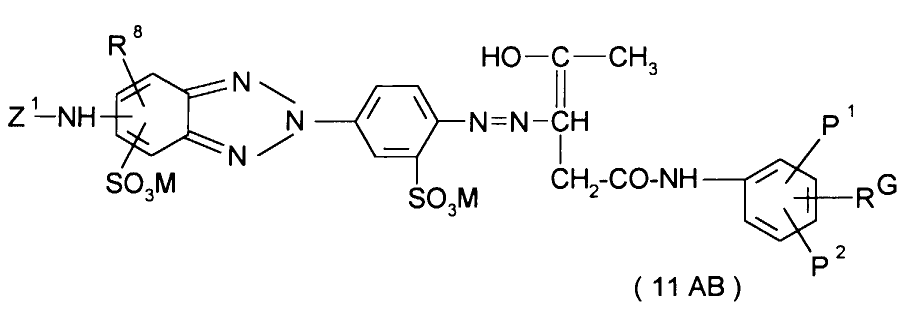 entsprechen, in welchen bedeuten:
- Z¹: ist ein Rest der obengenannten und definierten allgemeinen Formel (2a) oder der 5,6-Difluor-pyrimidin-4-yl-Rest;
- M: hat eine der obengenannten Bedeutungen;
- D: ist ein Benzolring oder ist ein Naphthalinring, wobei die Azogruppe an den Naphthalinring bevorzugt in β-Stellung gebunden ist und wobei im Falle, daß D den Naphthalinring bedeutet, R² und R³ bevorzugt jedes, unabhängig voneinander, ein Wasserstoffatom oder eine Sulfogruppe bedeuten;
- R¹: ist Wasserstoff oder Sulfo oder eine Gruppe Y-SO₂-W^{o}- obengenannter Bedeutung;
- R²: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo und ist bevorzugt Wasserstoff, Methyl, Methoxy, Brom, Chlor, Sulfo oder Carboxy und insbesondere bevorzugt Wasserstoff, Methoxy oder Sulfo;
- R³: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Nitro, Carboxy oder Sulfo, bevorzugt Wasserstoff, Methyl, Methoxy, Chlor, Carboxy, Sulfo oder Acetylamino und insbesondere bevorzugt Wasserstoff, Methoxy oder Sulfo;
- R⁴: ist Hydroxy oder Amino, bevorzugt Hydroxy;
- R⁵: ist Methyl, Carboxy, Carbomethoxy oder Carbethoxy, bevorzugt Methyl oder Carboxy;
- R⁶: ist Acetylamino, Propionylamino, Ureido oder Methyl;
- R⁷: ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy oder Ethoxy;
- R⁸: ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;
- R⁹: ist Wasserstoff, Cyano, Carbamoyl, Sulfamoyl oder Sulfomethyl, bevorzugt Wasserstoff oder Carbamoyl;
- R²¹: hat eine der Bedeutungen von R¹;
- R²²: hat eine der Bedeutungen von R²;
- R²³: hat eine der Bedeutungen von R³;
- ALK: ist Alkyl von 1 bis 4 C-Atomen, wie Methyl und Ethyl, oder Alkyl von 2 bis 4 C-Atomen, wie Ethyl und Propyl, das durch Hydroxy, Carboxy, Sulfo oder Sulfato substituiert sein kann;
- G¹: ist Alkylen von 1 bis 4 C-Atomen, wie Ethylen und Propylen, oder ist Phenylen oder durch Sulfo, Carboxy und/oder Alkyl von 1 bis 4 C-Atomen, wie Methyl, substituiertes Phenylen;
- G²: ist eine Gruppe der Formel -NH-alk- , -NH-phen- oder -alk- , in welchen alk für Alkylen von 2 bis 4 C-Atomen steht und phen Sulfo-phenylen oder Phenylen bedeutet;
- x: ist die Zahl Null oder 1;
- m: ist die Zahl Null, 1 oder 2 (wobei im Falle von m gleich Null diese Gruppe Wasserstoff ist);
- p: ist die Zahl Null oder 1 (wobei im Falle von p gleich Null diese Gruppe Wasserstoff bedeutet); in den Verbindungen der Formeln (11A), (11F), (11N) und (11V) steht die Amino- bzw. Amidogruppierung in 2- oder 3-Stellung an den 8-Naphthol-Rest gebunden und in den Verbindungen der Formeln (11C), (11D), (11L), (11M), (11R) und (11U) steht die eine Gruppe -SO₃M in meta- oder para-Stellung zur Amino- bzw. Acylaminogruppe gebunden.

Schwermetallkomplex-Azofarbstoffe von besonderer Bedeutung sind beispielsweise die 1,2-Chromkomplex- und 1,2-Kobaltkomplex- und insbesondere die 1:1-Kupferkomplex-Monoazoverbindungen der Azoverbindungen der nachstehenden allgemeinen Formeln (12A) und (12B): 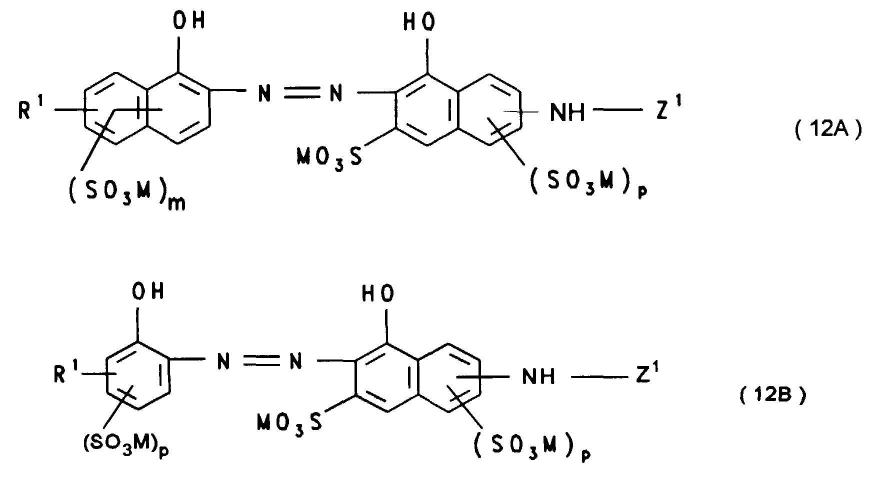 in welchen
- M, m und Z¹: die obengenannten, insbesondere bevorzugten, Bedeutungen haben und
- p: für die Zahl Null oder 1 steht (wobei im Falle von p gleich Null diese Gruppe Wasserstoff bedeutet).

Von den erfindungsgemäßen Phthalocyaninfarbstoffen sind diejenigen bevorzugt, die der allgemeinen Formel (13) 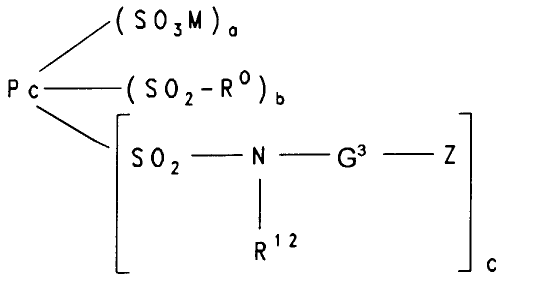 entsprechen, in welcher bedeuten:
- Pc: ist der Rest eines Aluminium-, Nickel- oder bevorzugt Kupferphthalocyanins;
- R^{o}: ist eine Aminogruppe der Formel -NR¹³R¹⁴, in welcher R¹³ und R¹⁴ unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest, wie der Morpholino- oder Piperidino-Rest;
- R¹²: ist ein Wasserstoff oder Alkyl von 1 bis 4 C-Atomen, wie Methyl und Ethyl;
- G³: ist Phenylen, das durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, beispielsweise Sulfophenylen, oder ist Alkylen von 2 bis 6 C-Atomen, wie Ethylen;
- Z: ist die faserreaktive Gruppe der Formel (2);
- a: ist eine Zahl von Null bis 3,
- b: ist eine Zahl von Null bis 3 und
- c: ist eine Zahl von 1 bis 2,
wobei die Summe von (a+b+c) gleich einer Zahl von 2 bis 4 ist.

Von diesen sind insbesondere diejenigen zu nennen, die den allgemeinen Formeln (13a) und (13b) 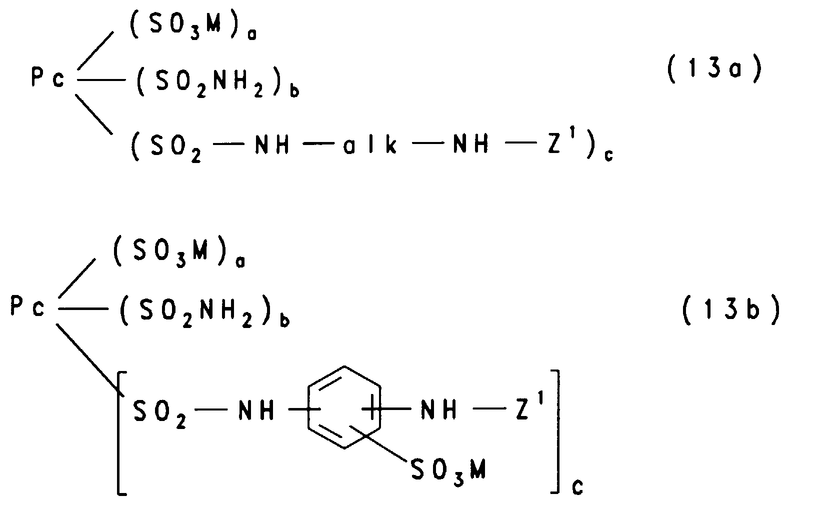 entsprechen, in welchen a für eine Zahl von 1 bis 3 steht, b eine Zahl von 0 bis 2 ist und c eine Zahl von 1 bis 2 bedeutet, wobei die Summe von (a + b + c) gleich einer Zahl von 2 bis 4 ist, Pc den Rest eines Nickel- oder bevorzugt Kupferphthalocyanins darstellt und alk Alkylen von 2 bis 4 C-Atomen, bevorzugt Ethylen, ist und Z¹ die obige Bedeutung besitzt.

Erfindungsgemäße Kupferformazanfarbstoffe sind insbesondere diejenigen, die der allgemeinen Formel (14) 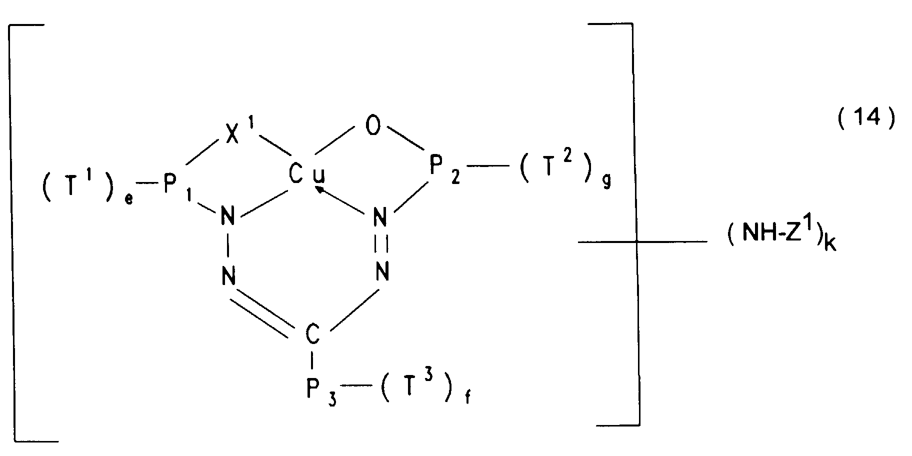 entsprechen, in welcher bedeuten:
- Z¹: hat die obengenannte Bedeutung;
- X¹: ist ein Sauerstoffatom oder bevorzugt die Carbonyloxygruppe der Formel -COO- ;
- P₁ und P₂: bedeuten, unabhängig voneinander, jedes einen Benzol- oder Naphthalinring, wobei an P₁ das Stickstoffatom und die Gruppe X¹ ortho-ständig zueinander und an P₂ das Sauerstoffatom und das Stickstoffatom ortho-ständig zueinander gebunden sind und die Benzolkerne bzw. Napthalinkerne noch durch einen oder zwei Substituenten aus der Gruppe Halogen, wie Chlor, Nitro, Alkyl von 1 bis 4 C-Atomen, wie Methyl und Ethyl, Alkoxy von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können, wobei sowohl P₁ als auch P₂ beide bevorzugt einen Benzolring bedeuten;
- P₃: ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können, wobei P₃ bevorzugt ein Benzolring ist;
- T¹, T² und T³: bedeuten, unabhängig voneinander, jedes eine Sulfo- oder Carboxygruppe, bevorzugt Sulfogruppe;
- e, f und g: stellen, unabhängig voneinander, jedes die Zahl Null, 1 oder 2 dar, wobei die Summe von (e + f + g) eine ganze Zahl von 1 bis 4 bedeutet und vorzugsweise 2 oder 3, insbesondere 2, ist, wobei im Falle von e oder f oder g gleich Null die Gruppe T¹ bzw. T² bzw. T³ ein Wasserstoffatom bedeutet;
- k: steht für die Zahl 1 oder 2, bevorzugt 1, wobei die Gruppe -NH-Z¹ an einen aromatischen Rest von P₁, P₂ oder P₃ gebunden sein kann und bevorzugt an P₂ gebunden ist.

Bevorzugt sind von den Kupferformazanfarbstoffen der allgemeinen Formel (14) diejenigen, in welchen P₁ und P₂ beide für einen Benzolring stehen, die Gruppe -NH-Z¹ an P₂ gebunden ist und T¹ und T² jedes eine Sulfogruppe bedeutet, wobei e und g beide für die Zahl 1 stehen. Sofern die Gruppe -NH-Z¹ an P₁ gebunden ist, ist e die Zahl Null, g die Zahl 2 und T² eine Sulfogruppe. Bevorzugt ist weiterhin die Gruppierung -P₃-(T³)_{f} der Phenyl- oder ein 2- oder 4-Sulfo-phenyl-Rest.

Hiervon sind insbesondere diejenigen Kupferformazan-Farbstoffe hervorzuheben, die der allgemeinen Formel (14a) 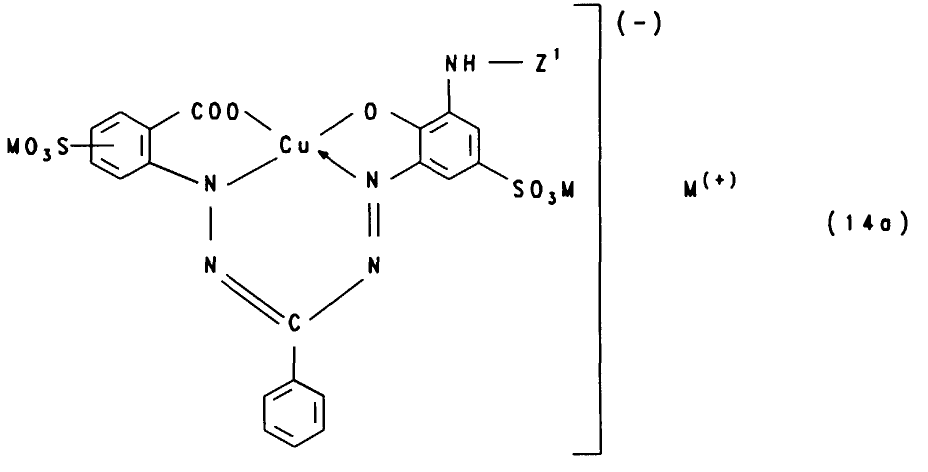 entsprechen, in welcher M und Z¹ die obengenannte, insbesondere bevorzugten Bedeutungen haben.

Von den erfindungsgemäßen Triphendioxazinfarbstoffen sind diejenigen hervorzuheben, die der allgemeinen Formel (15) 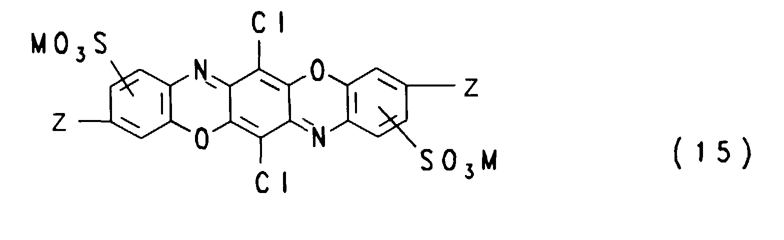 entsprechen, in welcher M und Z eine der obengenannten Bedeutungen haben und die beiden Sulfogruppen -SO₃M bevorzugt in ortho-Stellung zum Sauerstoffatom des heterocyclischen Ringes an den Benzolkern gebunden sind.

Von den erfindungsgemäßen Anthrachinonfarbstoffen sind insbesondere diejenigen zu erwähnen, die der allgemeinen Formel (16) 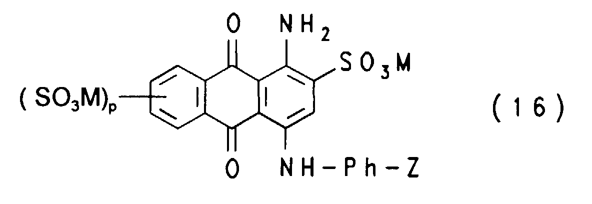 entsprechen, in welcher
- M, Z und p: eine der obengenannten Bedeutungen haben und
- Ph: Phenylen ist, das durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann, oder Phenylen ist, das durch 3 oder 4 Methylgruppen substituiert ist, oder Cyclohexylen ist.

Die vorliegende Erfindung betrifft weiterhin Verfahren zur Herstellung der erfindungsgemäßen Farbstoffe der allgemeinen Formel (1). Sie lassen sich in an und für sich üblicher Weise analog bekannten, für die jeweilige Farbstoffklasse spezifischen Synthesewegen herstellen, indem man für den jeweiligen Farbstoff typische Vorprodukte, von denen mindestens eines eine oder zwei Gruppen der allgemeinen Formel (2) enthält, miteinander umsetzt, oder indem man eine Verbindung der allgemeinen Formel (20) 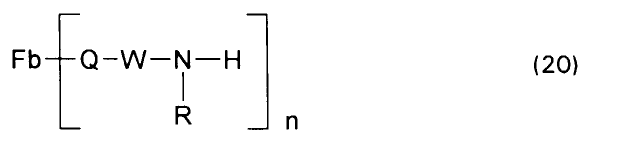 mit Fb, R, Q, W und n der obengenannten Bedeutungen in äquivalenter Menge mit 4,5,6-Trifluor-pyrimidin umsetzt, oder indem man eine Verbindung der allgemeinen Formel Fb-NH(R^{A})H mit Fb und R^{A} der obengenannten Bedeutung mit einer Verbindung der allgemeinen Formel (21) 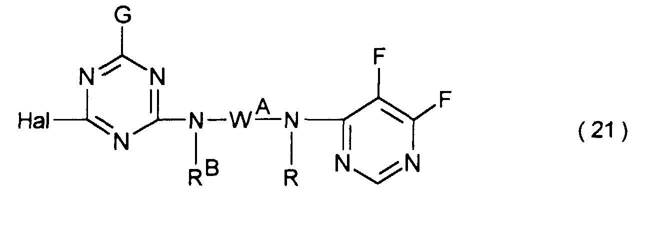 in welcher Hal für Halogen, wie Fluor und Chlor, steht und G, R^{B}, W^{A} und R die obengenannten Bedeutungen haben, umsetzt, oder indem man eine Verbindung der allgemeinen Formel (22) 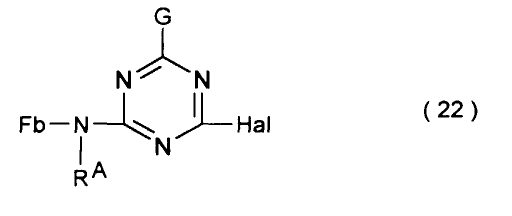 mit Fb, R^{A}, G und Hal der obengenannten Bedeutung mit einer Verbindung der allgemeinen Formel (23) 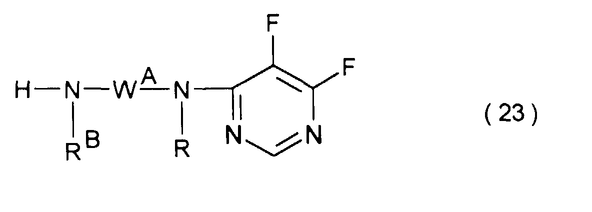 mit R^{B}, W^{A} und R der obengenannten Bedeutung umsetzt.

Bei den Kondensationsreaktionen ist darauf zu achten, daß die faserreaktiven Gruppierungen im alkalischen Bereich nicht geschädigt werden.

Die Umsetzungen der Ausgangsverbindungen erfolgen im wäßrigen oder wäßrig-organischen Medium in Suspension oder Lösung. Führt man die Umsetzungen in einem wäßrig-organischen Medium durch, so ist das organische Medium beispielsweise Aceton, Dimethylformamid, Dimethylsulfoxid oder N-Methyl-pyrrolidon. Vorteilhaft wird der bei der Kondensation freiwerdende Halogenwasserstoff laufend durch Zugabe wäßriger Alkali- oder Erdalkalihydroxide, -carbonate oder -bicarbonate neutralisiert. Die Kondensationsreaktion des 4,5,6-Trifluor-pyrimidins erfolgt in der Regel bei einer Temperatur zwischen -5°C und +50°C, bevorzugt bei einer Temperatur zwischen 0°C und +40°C, und bei einem pH-Wert zwischen 2 und 11, bevorzugt zwischen 4 und 10.

Die Umsetzung der Ausgangsverbindungen der allgemeinen Formel Fb-N(R^{A})H und der allgemeinen Formel (21) erfolgt in der Regel bei einer Temperatur zwischen -5°C und +60°C, im Falle von Hal gleich Fluor bevorzugt bei einer Temperatur zwischen 0°C und 30°C, und bei einem pH-Wert zwischen 3 und 10, bevorzugt zwischen 6 und 9.
Die Umsetzung der Verbindungen der allgemeinen Formeln (22) und (23) erfolgt in der Regel bei einer Temperatur zwischen -5°C und +30°C, im Falle von Hal gleich Fluor bevorzugt bei einer Temperatur zwischen 0°C und 30°C, und bei einem pH-Wert zwischen 3 und 10, bevorzugt zwischen 6 und 9.

Die Ausgangsverbindungen Fb-N(R^{A})H bzw. der allgemeinen Formel (20) und deren Vorprodukte sind allgemein bekannt und in der Literatur zahlreich beschrieben.

Die Ausgangsverbindungen der allgemeinen Formeln (21) und (23) lassen sich in an und für sich üblicher und bekannter Weise durch Umsetzung eines durch den Substituenten G substituierten Dihalogeno-s-triazins mit einem Amin der allgemeinen Formel H(R^{B})N-W^{A}-N(R)H und anschließend mit 4,5,6-Trifluorpyrimidin bzw. durch Umsetzung dieser Diaminoverbindung mit 4,5,6-Trifluor-pyrimidin herstellen. Analog gewinnt man nach an und für sich bekannten Verfahrensweisen die Ausgangsverbindung der allgemeinen Formel (22) durch Umsetzung einer Verbindung der allgemeinen Formel Fb-N(R^{A})H der obengenannten Bedeutung mit einem durch den Substituenten G substituierten Dihalogeno-s-triazin.

Aromatische Amine, die als Diazokomponenten zur Synthese der erfindungsgemäßen Azofarbstoffe der allgemeinen Formel (1) dienen und den allgemeinen Formel D¹-NH₂ entsprechen, sind beispielsweise:
1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminodiphenyl, 1-Aminobenzol-2-, -3- oder -4-carbonsäure, 2-Aminodiphenylether, 1-Aminobenzol-2-, -3- oder -4-sulfonsäureamid, -N-methylamid, -N-ethylamid, -N,N-dimethylamid oder -N,N-diethylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,4-Diaminobenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-3,6- oder -5,7-disulfonsäure, 1-Aminonaphthalin-3,6- oder -5,7-disulfonsäure, 2-Amino-naphthalin-1-sulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, 3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 2-(β-Sulfatoethylsulfonyl)-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(sulfatoethylsulfonyl)-anilin, 2-Chlor-4-(β-sulfatoethylsulfonyl)-anilin, 2-Brom-4-(β-sulfatoethylsulfonyl)-anilin, 4-Methoxy-3-(β-sulfatoethylsulfonyl)-anilin, 4-Chlor-3-(β-sulfatoethylsulfonyl)-anilin, 2-Ethoxy-4- oder -5-(β-sulfatoethylsulfonyl)-anilin, 2-Methyl-4-(β-sulfatoethylsulfonyl)-anilin, 2-Methoxy-5- oder -4-(β-sulfatoethylsulfonyl)-anilin, 2,4-Diethoxy-5-(β-sulfato-ethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-5-(β-sulfatoethylsulfonyl)-anilin, 2-Hydroxy-3-sulfo-5-(β-sulfato-ethylsulfonyl)-anilin, 3- oder 4-(β-Acetoxyethylsulfonyl)-anilin, 6-Carboxy-1-sulfo-2-aminonaphthalin, 5-(β-Sulfatoethylsulfonyl)-2-aminonaphthalin, 6- oder 7- oder 8-(β-Sulfatoethylsulfonyl)-2-aminonaphthalin, 6-(β-Sulfatoethylsulfonyl)-1-sulfo-2-aminonaphthalin, 5-(β-Sulfatoethylsulfonyl)-1-sulfo-2-aminonaphthalin, 8-(β-Sulfatoethylsulfonyl)-6-sulfo-2-aminonaphthalin, 4-[N-Methyl-N-(β-sulfatoethylsulfonyl)]-amino-anilin, 3-[N-Methyl-N-(β-sulfatoethylsulfonyl)]-amino-anilin, 4-[β-(β'-Sulfatoethylsulfonyl)-ethyl]-anilin, 3- oder 4-[β-(β'-Chlorethylsulfonyl)-ethylamino]-anilin, 3- oder 4-[β-(β'-Sulfatoethylsulfonyl)-ethylamino]-anilin, 3- oder 4-[γ-(β'-Chlorethylsulfonyl)-propylamino]-anilin, 3- oder 4-[γ-(β'-Sulfatoethylsulfonyl)-propylamino]-anilin und 3- oder 4-[γ-(Vinylsulfonyl)-propylamino]-anilin.

Ausgangsverbindungen entsprechend der allgemeinen Formel H(R)N-W-Q-D²-NH₂ sind beispielsweise 1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol,1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol,1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenyl), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- oder 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbinsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 1-Amino-4-methyl-5-aminomethylbenzol-6-sulfonsäure, 4,4'-Diamino-diphenyl-3-sulfonsäure, 1,4-Diamino-naphthalin-6-sulfonsäure, 1,4-Diamino-naphthalin-2-sulfonsäure, 2,6-Diamino-naphthalin-4,8-disulfonsäure und 2,6-Diamino-naphthalin-8-sulfonsäure.

Ausgangsverbindungen, die zur Herstellung von erfindungsgemäßen Disazofarbstoffen der allgemeinen Formel (1) zunächst als Kupplungskomponente und sodann, in Form der gebildeten Amino-Azoverbindung, als Diazokomponente dienen und der allgemeinen Formel H-E-NH₂ entsprechen, sind beispielsweise Anilin, 3-Methyl-anilin, 2-Methoxy-5-methyl-anilin, 2,5-Dimethyl-anilin, 3-Ureido-anilin, 3-Acetylamino-anilin, 3-Propionylamino-anilin, 3-Butyrylamino-anilin, 3-Methoxy-anilin, 2-Methyl-5-acetylamino-anilin, 2-Methoxy-5-acetylamino-anilin, 2-Methoxy-5-methyl-anilin, 3-(Hydroxyacetylamino)-anilin, 1,3-Diaminobenzol-4-sulfonsäure, 1-Amino-naphthalin-6-, -7- oder -8-sulfonsäure, 1-Amino-2-methoxy-naphthalin-6-sulfonsäure, 2-Amino-5-hydroxy-naphthalin-7-sulfonsäure, 2-Amino-5-hydroxy-naphthalin-1,7-disulfonsäure, 2-Amino-8-hydroxy-naphthalin-6-sulfonsäure, 2-(4'-Amino-benzoylamino)-5-naphthol-7-sulfonsäure, 1-(4'-Amino-2'-sulfo-phenyl)-3-methyl-5-pyrazolon, 1-(4'-Amino-2'-sulfo-phenyl)-3-carboxy-5-pyrazolon und N-(Acetoacetyl)-3-sulfo-4-amino-anilid.

Ausgangsverbindungen zur Herstellung der erfindungsgemäßen Azoverbindungen der allgemeinen Formel (1), die als Kupplungskomponenten dienen können und den allgemeinen Formeln H-K¹ oder H-K²-Q-W-N(R)H oder H-K-H entsprechen, sind beispielsweise:
Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- und 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- und -4,6-disulfonsäure (1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2']-3-methyl-5-pyrazolon, 1-(5',7'-Disulfonaphthyl-[2']-3-methyl-5-pyrazolon, 1-(2',5'-Dichlor-4'-sulfophenyl)-3-methyl-5-pyrazolon, 3-Aminocarbonyl-4-methyl-6-hydroxypyridon-2, 1-Ethyl-3-cyan- oder -3-chlor-4-methyl-6-hydroxypyridon-2, 1-Ethyl-3-sulfomethyl-4-methyl-6-hydroxypyridon-2,2,4,6-Triamino-3-cyanpyridin, 2-(3'-Sulfophenylamino)-4,6-diamino-3-cyanpyridin, 2-(2'-Hydroxyethylamino-3-cyan-4-methyl-6-aminopyridin, 2,6-Bis-(2'-hydroxyethylamino)-3-cyan-4-methylpyridin, 1-Ethyl-3-carbamoyl-4-methyl-6-hydroxypyridon-(2), 1-Ethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-7-(phenylazo)-naphthalin-3,6-disulfonsäure, 1-Amino-8-hydroxy-7-(4'-sulfophenylazo)-naphthalin-3,6-disulfonsäure, 1-Amino-8-hydroxy-7-(2',5'-disulfophenylazo)naphthalin-3,6-disulfonsäure, 1-[4'-(β-Sulfatoethyl-sulfonyl)-phenyl]-3-methyl-5-pyrazolon, 1-[4'-(Vinyl-sulfonyl)-phenyl]-3-methyl-5-pyrazolon, 1-[4'-(β-Sulfatoethylsulfonyl)-phenyl]-3-carboxy-5-pyrazolon, 1-[3'-[β-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]-6-sulfo-8-naphthol, 3-[3'-(β-Chlorethylsulfonyl)-benzoylamino]-6-sulfo-8-naphthol, 3-[3'-(Vinylsulfonyl)-benzoyl-amino]-6-sulfo-8-naphthol, 6-Sulfo-1-[3'-(β-chlorethylsulfonyl)-benzoylamino]-naphthol, 7-Sulfo-[3'-(vinylsulfonyl)-benzoylamino]-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonyl-phenyl)-ureido]-3,6-disulfo-8-naphthol, 1-[N'-(3'-Vinylsulfonyl-propyl)-ureido]-3,6-disulfo-8-naphthol, 1-[N'-(3'-β-Chlor-ethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(3'-β-Chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-Chlorethylsulfonyl-propyl)-ureido]-6-sulfo-8-naphthol, 3-[N'-(3'-β-Chlorethylsulfonyl-phenyl)-ureido]-6-sulfo-8-naphthol, 3-[N'-(3'-Vinylsulfonyl-propyl)-ureido]-6-sulfo-8-naphthol, 2-Sulfo-5-[N'-(3''-β-chlorethylsulfonyl)-phenyl]-ureido-anilin, 3-[N'-(3''-β-Sulfatoethylsulfonyl)-phenyl]-ureido-anilin und 6-Sulfo-1-[N'-(3''-β-Sulfatoethylsulfonyl)-phenyl]-ureido-8-naphthol.

Kupplungskomponenten entsprechend der allgemeinen Formel H-K-N(R)H bzw. H-K-Q-W-N(R)H , die zum Aufbau der erfindungsgemäßen Azofarbstoffe mit dem faserreaktiven 5,6-Difluor-pyrimidin-4-yl-Rest in der Kupplungskomponente dienen können, wobei bei dem zunächst erhaltenen aminogruppenhaltigen Azofarbstoff entsprechend der allgemeinen Formel (20) in dessen Aminogruppe -N(R)H der faserreaktive 5,6-Difluor-pyrimidin-4-yl-Rest eingeführt werden kann bzw. wird, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-(Hydroxyacetylamino)-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6-sulfonsäure, 1-Amino-naphthalin-7-sulfonsäure, 4-Sulfo-1,3-diamino-benzol, 6-Sulfo-2-methoxy-1-amino-naphthalin, 5,7-Disulfo-2-aminonaphthalin, 1-Amino-8-hydroxy-naphthalin-4-sulfonsäure, 1-Amino-8-hydroxynaphthalin-6-sulfonsäure, 1-Amino-8-hydroxynaphthalin-2,4-disulfonsäure, 1-Amino-8-naphthol-3,6-disulfonsäure, 1-Amino-8-hydroxy-4,6-disulfonsäure, 1-Amino-8-hydroxy-naphthalin-2,4,6-trisulfonsäure, 2-(Methylamino)- und 2-(Ethylamino)-5-hydroxynaphthalin-7-sulfonsäure, 2-Amino-5-hydroxynaphthalin-1,7-disulfonsäure, 2-(Methylamino)- und 2-(Ethylamino)-8-hydroxynaphthalin-6-sulfonsäure, 2-Amino-8-hydroxynaphthalin-3,6-disulfonsäure, 2-(4'-Amino-3'-sulfophenylamino)-5-hydroxynaphthalin-7-sulfonsäure, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-(β-Aminoethyl)-3-cyano-4-methyl-6-hydroxy-pyrid-2-on, 1-(γ-Aminopropyl)-3-sulfomethyl-4-methyl-6-hydroxy-pyrid-2-on, 1,3-Diaminobenzol, 3-[N,N-Di-(β-hydroxyethyl)]-amino-anilin, 3-[N,N-Di-(β-sulfatoethyl)]-amino-4-methoxy-anilin, 3-(Sulfo-benzylamino)-anilin, 3-(Sulfobenzoylamino)-4-chlor-anilin und 3-[N,N-Di-(sulfobenzyl)]-amino-anilin, 2-Sulfo-5-acetylamino-anilin, 2-Amino-5-naphthol-7-sulfonsäure, 2-Amino-8-naphthol-6-sulfonsäure, 1-(4'-Aminobenzoyl)-amino-8-hydroxynaphthalin-3,6-disulfonsäure, 1-(4'-Aminobenzoyl)-amino-8-hydroxynaphthalin-4,6-disulfonsäure, 1-(3'-Aminobenzyl)-amino-8-hydroxynaphthalin-3,6-disulfonsäure, 1-(3'-Aminobenzoyl)-amino-8-hydroxynaphthalin-4,6-disulfonsäure, 1-(2'-Aminobenzoyl)-amino-8-hydroxy-naphthalin-3,6-disulfonsäure, 1-(2'-Aminobenzoyl)-amino-8-hydroxy-naphthalin-4,6-disulfonsäure, 2-(3'-Aminobenzoyl)-amino-5-hydroxy-naphthalin-7-sulfonsäure, 2-(2'-Aminobenzoyl)-amino-5-hydroxy-naphthalin-7-sulfonsäure, 2-(4'-Aminobenzoyl)-amino-8-hydroxynaphthalin-6-sulfonsäure, 2-(3'-Aminobenzoyl)-amino-8-hydroxynaphthalin-6-sulfonsäure, 2-(2'-Aminobenzoyl)-amino-8-hydroxynaphthalin-6-sulfonsäure, 2-(4'-Aminobenzoyl)-amino-5-naphthol-7-sulfonsäure, 1-(4'-Amino- oder 1-(4'-Acetylamino-2-sulfophenyl)-3-methyl- oder -3-carboxy-5-pyrazolon, 3-Sulfo-4-amino-acetoacetylanilid, 1-Amino-8-naphthol-3,6- oder -4,6-disulfonsäure, 1-(3'-Aminobenzoylamino)- oder 1-(4'-Aminobenzoylamino)-8-naphthol-3,6- oder -4,6-disulfonsäure, 1-Acetylamino-8-naphthol-3,6- oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methyl-amino)-8-naphthol-6-sulfonsäure, 1-(3'-Amino- oder 1-(3'-Acetylamino-6'-sulfophenyl)-3-methyl- oder -3-carboxy-5-pyrazolon, 2-(N-Methyl-N-acetylamino)- oder 2-Methylamino-5-naphthol-7-sulfonsäure, N-Methyl-anilin und N-Propyl-m-toluidin.

Geht man von Diazokomponenten der Formel H(R)N-W-Q-D²-NH₂ aus, so können diese auch in der Form der Monoacylamino-amino-Verbindungen eingesetzt werden, wobei der Acylrest insbesondere der Acetylrest ist. Diese Monoacylamino-amino-Verbindungen werden zunächst diazotiert und mit einer kuppelfähigen Verbindung gekuppelt; anschließend wird der Acylrest hydrolytisch abgespalten, und die so nunmehr wieder frei gewordene Aminogruppe kann mit dem faserreaktiven 4,5-Difluor-pyrimidin-6-yl-Rest verbunden werden. Solche monoacylierten Diamine sind beispielsweise 2-Sulfo-5-acetylamino-anilin und 2-Sulfo-4-acetylamino-anilin. In gleicher Weise können aminogruppenhaltige Kupplungskomponenten in Form des Acylamino-Derivates in die Kupplungsreaktion eingesetzt werden, wobei anschließend auch hier der Acylrest hydrolytisch abgespalten werden kann, um die freiwerdende Aminogruppe mit dem faserreaktiven 4,5-Difluor-pyrimidin-6-yl-Rest zu verbinden.

Bivalente Kupplungskomponenten, die zum Aufbau erfindungsgemäßer Disazofarbstoffe dienen können, in welchen der bivalente Kupplungsrest mit zwei Diazokomponenten verbunden ist, von denen die eine oder beide einen faserreaktiven Rest Z enthalten, beispielsweise von Farbstoffen der allgemeinen Formel (3d), sind beispielsweise Resorcin, 1,3-Diaminobenzol, 5,5'-Dihydroxy-7,7'-disulfo-2,2'-dinaphthyl-harnstoff, 1,8-Dihydroxy-3,6-disulfo-naphthalin und insbesondere 1-Amino-8-naphthol-3,6-disulfonsäure und 1-Amino-8-naphthol-4,6-disulfonsäure.

Geht man bei der erfindungsgemäßen Synthese der Azofarbstoffe von Diazo- oder Kupplungskomponenten aus, die bereits die Gruppe der allgemeinen Formel (2) enthalten, erfolgen die Umsetzungen in der üblichen Verfahrensweise der Diazotierungs- und Kupplungsreaktionen, so die Diazotierung in der Regel bei einer Temperatur zwischen -5°C und + 15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt in wäßrigem Medium.

Bei der erfindungsgemäßen Synthese von Schwermetallkomplex-Azofarbstoffen, beispielsweise solchen entsprechend der allgemeinen Formel (3h) und (3i), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält, wobei die schwermetallfreien Ausgangs-Azoverbindungen zudem einen Acylaminorest gebunden enthalten können, wie einen Acetylaminorest. Beispielsweise kann man bei der Synthese der Kupferkomplex-Azofarbstoffe der Formel (3i) von einer Ausgangsverbindung entsprechend der allgemeinen Formel (25) 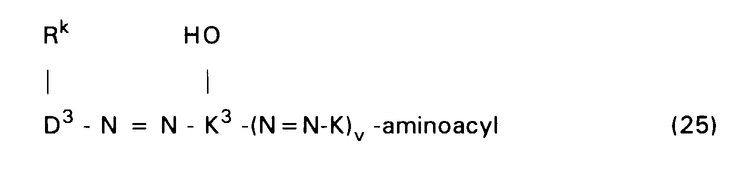 ausgehen, in welcher D³, K, K³ und v eine der obengenannten Bedeutungen haben und R^{k} ein Wasserstoffatom oder eine in ortho-Stellung zur Azogruppe an D³ gebundene Hydroxy- oder Methoxygruppe ist, und diese acylaminogruppenhaltige Ausgangs-Azoverbindung analog bekannten und üblichen Verfahrensweisen mit einem kupferabgebenden Mittel, wie einem Kupfersalz, umsetzen. Ist R^{k} ein Wasserstoffatom oder eine Methoxygruppe, so kann man die Verbindung (25) einer auf üblichen Wege durchzuführenden oxidativen oder entalkylierenden Kupferungsreaktion unterwerfen. Die nun erhaltene Kupferkomplex-Azoverbindung mit der Acylaminogruppe kann sodann analog bekannten Verfahrensweisen nach oder unter Hydrolyse der Acylaminogruppe zur Aminogruppe mit 4,5,6-Trifluorpyrimidin zu dem erfindungsgemäßen Farbstoff der allgemeinen Formel (1) umgesetzt werden.

Die Abscheidung der erfindungsgemäß hergestellten Farbstoffe der allgemeinen Formel (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.

Die Farbstoffe der allgemeinen Formel (1) - im nachfolgenden Farbstoffe (1) genannt - eignen sich zum Färben (was das Bedrucken einschließt) der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die Farbstoffe (1) lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Diese Färbe- und Druckverfahren sind zahlreich in der allgemeinen Fachliteratur wie auch in der Patentliteratur, wie beispielsweise in den anfangs genannten Druckschriften, beschrieben.

Gegenstand der vorliegenden Erfindung ist deshalb auch die Verwendung der Farbstoffe (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff (1) als Farbmittel eingesetzt wird, indem man den Farbstoff (1) im wäßrigen Medium auf das Material appliziert und ihn mittels Wärme oder mittels einer alkalisch wirkenden Verbindung oder mittels beidem auf dem Material fixiert.

Die Farbstoffe (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Des weiteren zeichnen sich die erfindungsgemäßen Farbstoffe (1) darin aus, daß nach dem Färbeprozeß auf dem Fasermaterial nicht fixierte Farbstoffanteile sich sehr leicht auswaschen lassen, ohne daß Weißwäsche, die sich mit in dem Waschprozeß befindet, durch den sich ablösenden Farbstoff angeschmutzt wird. Hieraus ergeben sich Vorteile für den Färbeprozeß; Waschzyklen und damit Kosten werden eingespart.

Die mit den Farbstoffen (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

a) Zu einer Lösung von 0 bis 5°C von 16 Teilen 1-Amino-8-hydroxy-3,6-disulfo-naphthalin in 150 Teilen Wasser werden unter Stickstoffatmosphäre bei einem pH-Wert von 9,5 bis 10 6,7 Teile 4,5,6-Trifluorpyrimidin stetig und langsam unter Rühren hinzugegeben, wobei der pH-Bereich mittels Zugabe verdünnter wäßriger Natriumhydroxidlösung gehalten wird. Es wird noch eine Stunde nachgerührt und sodann ein pH-Wert von 7 eingestellt.
b) Zu der so hergestellten, als Kupplungskomponente dienenden Verbindung gibt man eine auf üblichem Wege aus 8,7 Teilen 2-Sulfo-anilin in 100 Teilen Wasser unter Verwendung von 10 Vol.-Teilen konzentrierter wäßriger Salzsäure und 25 Vol.-Teilen einer wäßrigen 2N-Natriumnitritlösung hergestellte Diazoniumsalzlösung hinzu und führt die Kupplungsreaktion bei einem pH-Wert von 6 und einer langsam von 5°C auf 20°C steigenden Temperatur durch. Man rührt noch einige Zeit nach und isoliert den erfindungsgemäßen Farbstoff, der, in Form der freien Säure geschrieben, die Formel 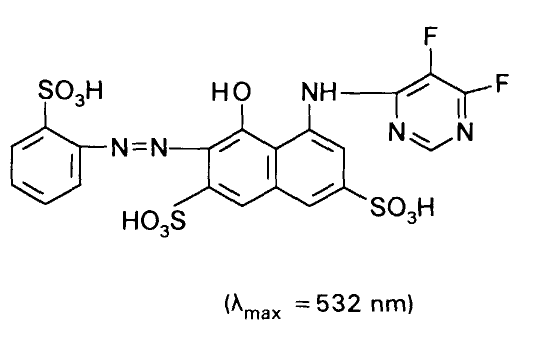 besitzt, in üblicher Weise, beispielsweise durch Aussalzen mit Natriumchlorid.

Der erfindungsgemäße Farbstoff zeigt sehr gute anwendungstechnische und faserreaktive Eigenschaften und färbt die in der Beschreibung genannten Materialien, wie insbesondere Cellulosefasermaterialien, nach den in den Technik für faserreaktive Farbstoffe üblichen Färbe- und Druckverfahren in farbstarken roten Tönen mit guten Echtheitseigenschaften, von denen insbesondere die guten Chlorbadewasserechtheiten hervorgehoben werden können.

### Beispiel 2

In eine gemäß den Angaben des Beispieles 1a) hergestellte Lösung der Kupplungskomponente gibt man unter Rühren eine auf üblichem Wege mittels 15 Teilen einer 31 %igen wäßrigen Salzsäure und 10 Teilen einer wäßrigen 5N-Natriumnitritlösung hergestellten Diazoniumsalzsuspension aus 20,5 Teilen 1-Sulfo-6-(β-sulfatoethylsulfonyl)-2-amino-naphthalin in 500 Teilen Wasser von 0°C, stellt den pH-Wert auf 7 und rührt noch einige Zeit unter Einhaltung des pH-Wertes bei etwa 15 bis 20°C nach. Man versetzt die so hergestellte Farbstofflösung mit 12 Teilen Dinatriumhydrogenphosphat und stellt mit Phosphorsäure einen pH-Wert von 7 ein.

Man isoliert den erhaltenen erfindungsgemäßen Azofarbstoff der Formel (in Form der freien Säure geschrieben) 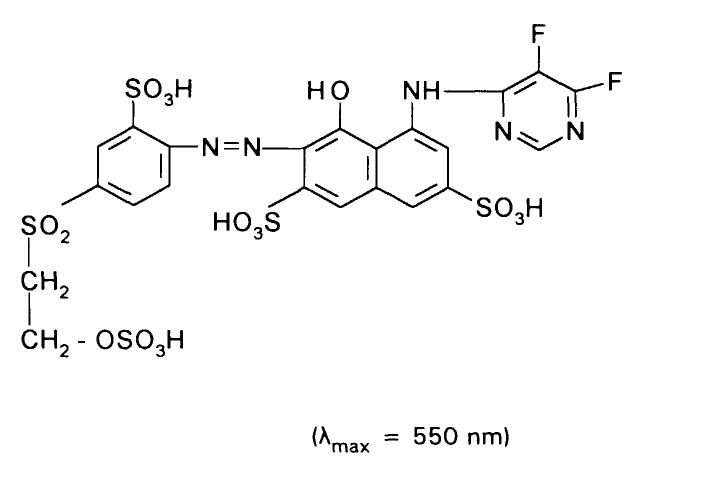 auf üblichem Wege, beispielsweise durch Eindampfen unter reduziertem Druck bei 50°C. Der Farbstoff zeigt sehr gute anwendungstechnische Eigenschaften und färbt beispielsweise Cellulosefasermaterialien bei einem hohen Fixiergrad nach den für faserreaktive Farbstoffe üblichen Anwendungsmethoden in brillanten blaustichig roten Tönen mit guten Echtheiten, von denen insbesondere die Chlorbadewasserechtheit hervorgehoben werden kann.

### Beispiel 3

Eine neutrale Lösung von 23,9 Teilen 3-Amino-6-sulfo-8-hydroxy-naphthalin in 200 Teilen Wasser wird unter gutem Rühren bei 20 bis 35°C mit 13,4 Teilen 4,5,6-Trifluorpyrimidin versetzt, wobei der pH-Wert des Reaktionsansatzes mit wäßriger Lithiumcarbonatlösung bei einem pH-Wert von 5,5 gehalten wird. Die erhaltene Suspension wird mit einer auf üblichem Wege hergestellten Diazoniumsalz-Suspension von 30,3 Teilen 1,5-Disulfo-2-amino-naphthalin unter Rühren versetzt, und die Kupplungsreaktion wird bei einer Temperatur von 10 bis 15°C und bei einem pH-Wert zwischen 6,5 und 7 zu Ende geführt.

Der erhaltene erfindungsgemäße Azofarbstoff besitzt, in Form der freien Säure geschrieben, die Formel 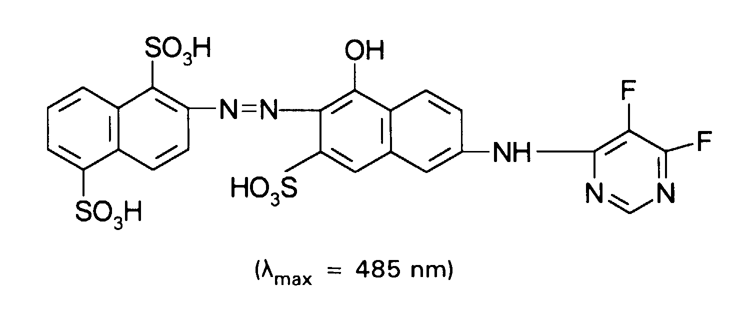 und wird in üblicher Weise durch Aussalzen mit Natriumchlorid als Alkalimetallsalz (Natriumsalz) isoliert. Er besitzt gute färberische Eigenschaften und liefert nach den in der Technik für faserreaktive Farbstoffe üblichen Anwendungs- und Fixierverfahren auf die in der Beschreibung genannten Materialien, wie insbesondere Cellulosefasermaterialien, wie Baumwolle, farbstarke orangefarbene Färbungen und Drucke mit guten Echtheitseigenschaften.

### Beispiel 4

Zur Herstellung eines erfindungsgemäßen Azofarbstoffes verfährt man gemäß den Angaben des Beispieles 3, setzt jedoch anstelle der dort verwendeten wäßrigen Diazoniumsalz-Suspension eine auf übliche Weise hergestellte wäßrige Suspension eines Diazoniumsalzes aus 20,3 Teilen 2-Sulfo-4-methoxy-anilin ein. Der erhaltene erfindungsgemäße Azofarbstoff der Formel (in Form der freien Säure geschrieben) 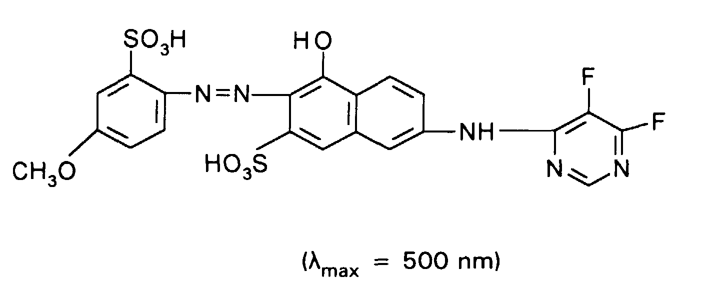 wird in üblicher Weise, beispielsweise durch Aussalzen mit Natriumchlorid, als Alkalimetallsalz isoliert. Er zeigt sehr gute anwendungstechnische Eigenschaften und färbt die in der Beschreibung genannten Fasermaterialien, wie Wolle und insbesondere Cellulosefasermaterialien, wie Baumwolle, in farbstarken, orangenen Tönen mit guten Echtheitseigenschaften.

### Beispiel 5

Man rührt langsam unter Einhaltung eines pH-Wertes zwischen 5,8 und 6,2 und einer Temperatur von etwa 40°C 13,8 Teile 4,5,6-Trifluorpyrimidin in eine neutrale Lösung von 54,5 Teilen der Azoverbindung 4-(3',6',8'-Trisulfo-naphth-2'-yl)-azo-3-ureido-anilin in 800 Teilen Wasser ein, rührt den Ansatz noch einige Zeit unter Einhaltung dieser Reaktionsbedingungen bis zur Beendigung der Umsetzung weiter, klärt nach Beendigung der Synthese die Lösung in üblicher Weise und isoliert den erfindungsgemäßen Farbstoff der Formel (in Form der freien Säure geschrieben) 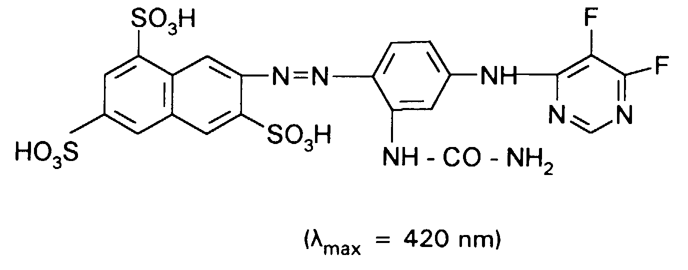 in üblicher Weise als Alkalimetallsalz (Natriumsalz). Er zeigt sehr gute faserreaktive Farbstoffeigenschaften und färbt die in der Beschreibung genannten Materialien, wie insbesondere Cellulosefasermaterialien, nach den in der Technik für faserreaktive Farbstoffe üblichen Applikations- und Fixierverfahren in farbstarken rotstichig gelben Tönen mit guten Echtheitseigenschaften.

### Beispiel 6

Eine Lösung von 21,1 Teilen 4-(4',8'-Disulfo-naphth-2'-yl)-azo-3-acetylamino-anilin in 1000 Teilen Wasser mit einer Temperatur von 35°C und einem pH-Wert von 8,5 wird unter gutem Rühren und unter Einhaltung eines pH-Wertes zwischen 6,5 und 7 mittels einer wäßrigen Natriumcarbonatlösung mit 7,0 Teilen 4,5,6-Trifluorpyrimidin versetzt. Man rührt den Ansatz noch etwa zwei bis drei Stunden nach und isoliert den erfindungsgemäßen Azofarbstoff der Formel (in Form der freien Säure geschrieben) 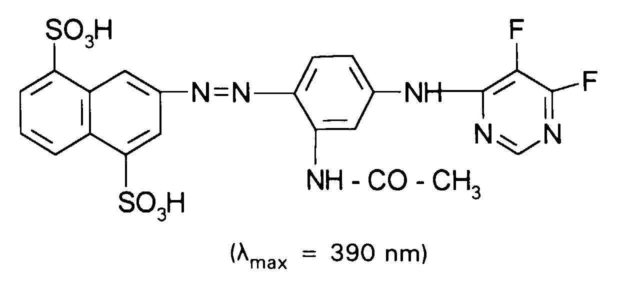 in üblicher Weise, beispielsweise durch Aussalzen mit Natriumchlorid. Er besitzt sehr gute faserreaktive, anwendungstechnische Eigenschaften und färbt die in der Beschreibung genannten Materialien, wie beispielsweise Baumwolle, in grünstichig gelben Tönen mit guten Echtheitseigenschaften.

### Beispiel 7

Eine neutrale Lösung von 40,9 Teilen der Disazoverbindung 4-[4'-(4'',6'',8''-Trisulfo-naphth-2''-yl)-azo-6'-sulfo-naphth-1'-yl]-3-methyl-anilin (auf üblichem Wege herstellbar durch Kupplung von 6-Sulfo-1-amino-naphthalin mit dem Diazoniumsalz der 2-Aminonaphthalin-4,6,8-trisulfonsäure und Diazotierung der erhaltenen Monoazoverbindung und Kupplung mit 3-Methyl-anilin) in 300 Teilen Wasser wird bei einer Temperatur von 40°C unter Einhaltung eines pH-Wertes zwischen 6 und 7 mit 9,2 Teilen 4,5,6-Trifluorpyrimidin versetzt. Man rührt noch etwa drei Stunden unter den angegebenen Reaktionsbedingungen nach und gibt sodann zu der erhaltenen wäßrigen Syntheselösung des erfindungsgemäßen Disazofarbstoffes 8,9 Teile Dinatriumhydrogenphosphat.

Der Disazofarbstoff wird in üblicher Weise isoliert, beispielsweise durch Eindampfen der Syntheselösung. Er besitzt, in Form der freien Säure geschrieben, die Formel

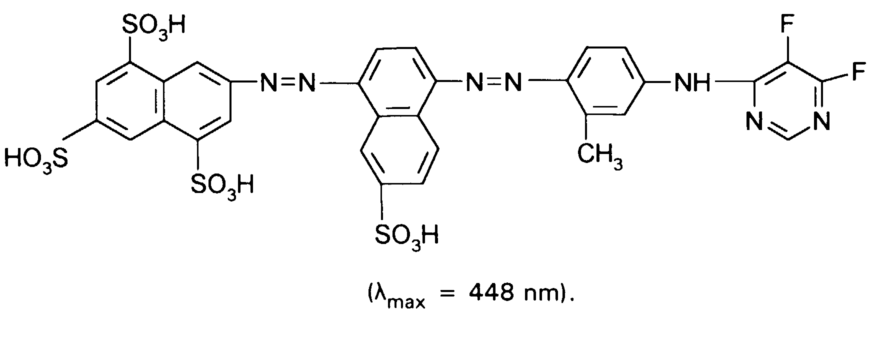

Nach den in der Technik für faserreaktive Farbstoffe üblichen Färbeverfahren erhält man mit dem erfindungsgemäßen Disazofarbstoff farbstarke, echte Färbungen in rotstichig braunen Tönen.

### Beispiel 8

a) 9,9 Teile 2,4-Diaminobenzolsulfonsäure werden in 100 Teilen Wasser mittels Lithiumhydroxid bei einem pH-Wert von 6,5 gelöst. Zu dieser Lösung rührt man langsam bei 35 bis 40°C 7,6 Teile 4,5,6-Trifluor-pyrimidin unter gleichzeitiger Einhaltung des pH-Wertes von 6,5 mittels Lithiumcarbonat ein. Man rührt noch zwei Stunden weiter und gibt sodann 100 Teile Eis und ein Teil Natriumfluorid und sodann 6,6 Teile Cyanurfluorid unter weiterem guten Rühren hinzu; während der Umsetzung sinkt der pH-Wert des Ansatzes auf etwa 3,7 bis 3,8. Man rührt noch kurze Zeit nach und filtriert den Ansatz.
b) Zu dieser Lösung des Lithiumsalzes der 2-(2',4'-Difluor-1',3',5'-triazin-6'-yl)-amino-4-(5',6'-difluor-pyrimidin-4'-yl)-amino-benzolsulfonsäure gibt man unter Rühren bei 5°C und unter Einhaltung eines pH-Wertes von 5,5 mittels wäßriger Natriumcarbonatlösung 170 Teile einer neutralen wäßrigen Lösung des Lithiumsalzes von 10,4 Teilen 3-Amino-6-sulfo-8-hydroxy-naphthalin, läßt die Temperatur auf 20°C steigen, rührt danach noch 20 Minuten weiter und erhöht sodann den pH-Wert auf 6,5. Nach weiteren 20 Minuten wird eine auf üblichem Wege hergestellte salzsaure wäßrige Suspension des Diazoniumsalzes aus 14,1 Teilen 1,5-Disulfo-2-amino-naphthalin hinzugegeben und die Kupplung bei einem pH-Wert von 6,5 während etwa einer Stunde zu Ende geführt.

Der erfindungsgemäße Farbstoff wird in üblicher Weise durch Aussalzen isoliert. Er besitzt, in Form der freien Säure geschrieben, die Formel 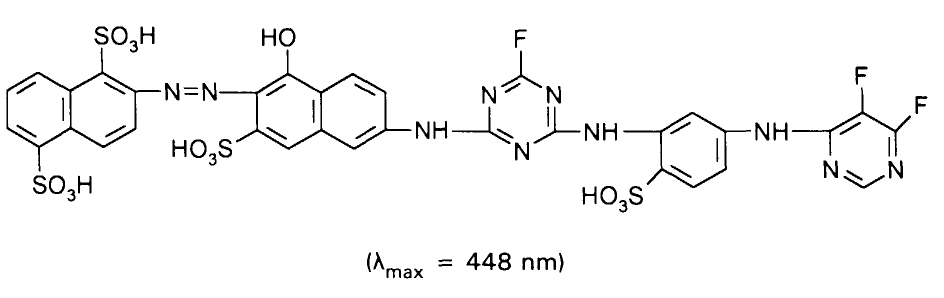 und färbt die in der Beschreibung genannten Fasermaterialien, wie insbesondere Baumwolle, in brillanten orangen Farbtönen mit sehr guten Naßechtheiten.

Der erfindungsgemäße Farbstoff kann in erfindungsgemäßer Weise ebenfalls hergestellt werden, indem man von der Azoverbindung 7-(1',5'-Disulfo-naphth-2-yl)-azo-3-amino-6-sulfo-8-naphthalin ausgeht und diese mit der gemäß Abschnitt a) hergestellten 2-(2',4'-Difluor-1',3',5'-triazin-6'-yl)-amino-4-(5',6'-difluor-pyrimidin-4'-yl)-amino-benzolsulfonsäure in äquivalenter Menge bei einem pH-Wert zwischen 7 und 7,5 und einer Temperatur zwischen 15 und 20°C umsetzt.

### Beispiel 9

a) 23,6 Teile 2-Amino-naphthalin-6,8-disulfonsäure-mononatriumsalz werden in eine Mischung aus 150 Teilen Wasser, 30 Teilen Eis und 20 Teilen konzentrierter wäßriger Salzsäure eingerührt und unter langsamer Zugabe von 17 Vol.-Teilen einer wäßrigen 30 %igen Natriumnitritlösung bei einer Temperatur zwischen 5 und 10°C diazotiert. Nach beendeter Diazotierungsreaktion wird überschüssige salpetrige Säure in üblicher Weise mit Amidosulfonsäure zerstört. Die erhaltene Suspension wird innerhalb von etwa 30 Minuten in eine neutrale Lösung aus 13,5 Teilen N-(3-Aminophenyl)-acetamid-Hydrochlorid, 50 Teilen Wasser, 50 Teilen Eis und etwa 30 Vol.-Teilen einer 10 %igen wäßrigen Natriumhydroxidlösung unter Einhaltung eines pH-Wertes zwischen 6,0 und 6,5 mittels 20 %iger wäßriger Kaliumhydrogencarbonat-Lösung und einer Temperatur unterhalb 10°C eingerührt. Man rührt noch etwa 30 Minuten unter Beibehaltung dieser Reaktionsbedingungen nach.
b) In einem gesonderten Ansatz rührt man 15,2 Teile 2,4-Diaminobenzol-sulfonsäure-mononatriumsalz in 100 Teilen Wasser an und löst das Natriumsalz mit 10 %iger wäßriger Lithiumhydroxidlösung bei einem pH-Wert von 6. Die erhaltene Lösung wird auf 40°C erwärmt und unter Rühren mit 12 Teilen 4,5,6-Trifluor-pyrimidin versetzt. Die Kondensationsreaktion wird unter Einhaltung eines pH-Wertes zwischen 5,8 und 6,2 mittels einer wäßrigen Lithiumhydroxidlösung bei 40°C während zwei Stunden zu Ende geführt.

Das ausgefallene Lithiumfluorid wird durch Filtration abgetrennt, das Filtrat mit etwa 200 Teilen Eis versetzt und das in Lösung befindliche primäre Kondensationsprodukt bei 0°C unter Einhaltung eines pH-Wertes zwischen 6 und 6,5 mittels 10 %iger wäßriger Lithiumhydroxidlösung mit 10 Teilen Trifluor-s-triazin umgesetzt. Man rührt den Ansatz noch etwa 15 Minuten nach und gibt die erhaltene Lösung sodann langsam bei 0°C unter Rühren zu der gemäß a) hergestellten Lösung der Azoverbindung. Man führt die Umsetzung zunächst bei etwa 10°C unter Einhaltung eines pH-Wertes zwischen 7,0 und 7,2 mittels 20 %iger wäßriger Natriumcarbonatlösung durch und erwärmt sodann den Ansatz innerhalb von drei Stunden unter Einhaltung dieses pH-Bereiches auf 25°C. Danach rührt man nochmals eine Stunde nach und klärt den Ansatz in üblicher Weise mittels Kieselgur und Filtration.

Man isoliert den erfindungsgemäßen Azofarbstoff der Formel (in Form der freien Säure geschrieben) 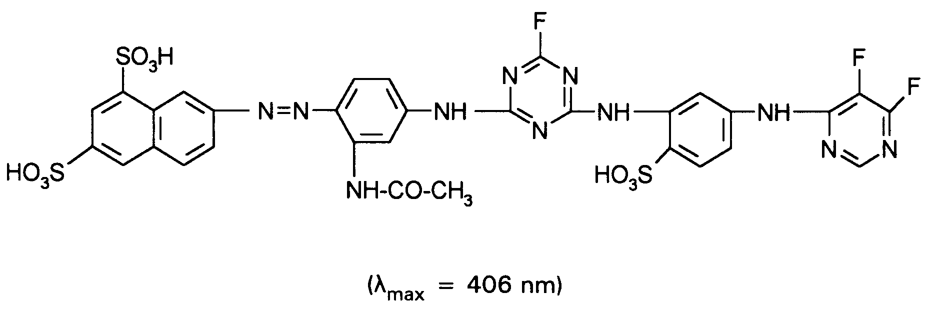 durch Aussalzen mittels Natriumchlorid als Alkalimetallsalz (Lithium-/Natriumsalz). Er besitzt sehr gute faserreaktive Farbstoffeigenschaften und liefert in den in der Technik für faserreaktive Farbstoffe üblichen Anwendungsverfahren beispielsweise auf Baumwolle farbstarke goldgelbe, hochechte Färbungen.

### Beispiele 10 bis 97

In den nachfolgenden Tabellenbeispielen werden weitere erfindungsgemäße Farbstoffe entsprechend der allgemeinen Formel (A) 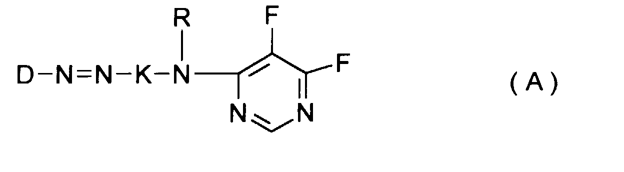 anhand ihrer Komponenten (dem Rest D der Diazokomponente D-NH₂ , dem Rest -K-N(R)- der aminogruppenhaltigen Kupplungskomponente der Formel H-K-N(R)H und 4,5,6-Trifluorpyrimidin) beschrieben. Sie lassen sich in einer der erfindungsgemäßen Verfahrensweisen, beispielsweise analog einem der obigen Ausführungsbeispiele, herstellen. Sie besitzen sehr gute faserreaktive Farbstoffeigenschaften und färben beispielsweise Baumwolle in dem in dem jeweiligen Tabellenbeispiel angegebenen Farbton in hoher Farbstärke und guten Echtheiten.

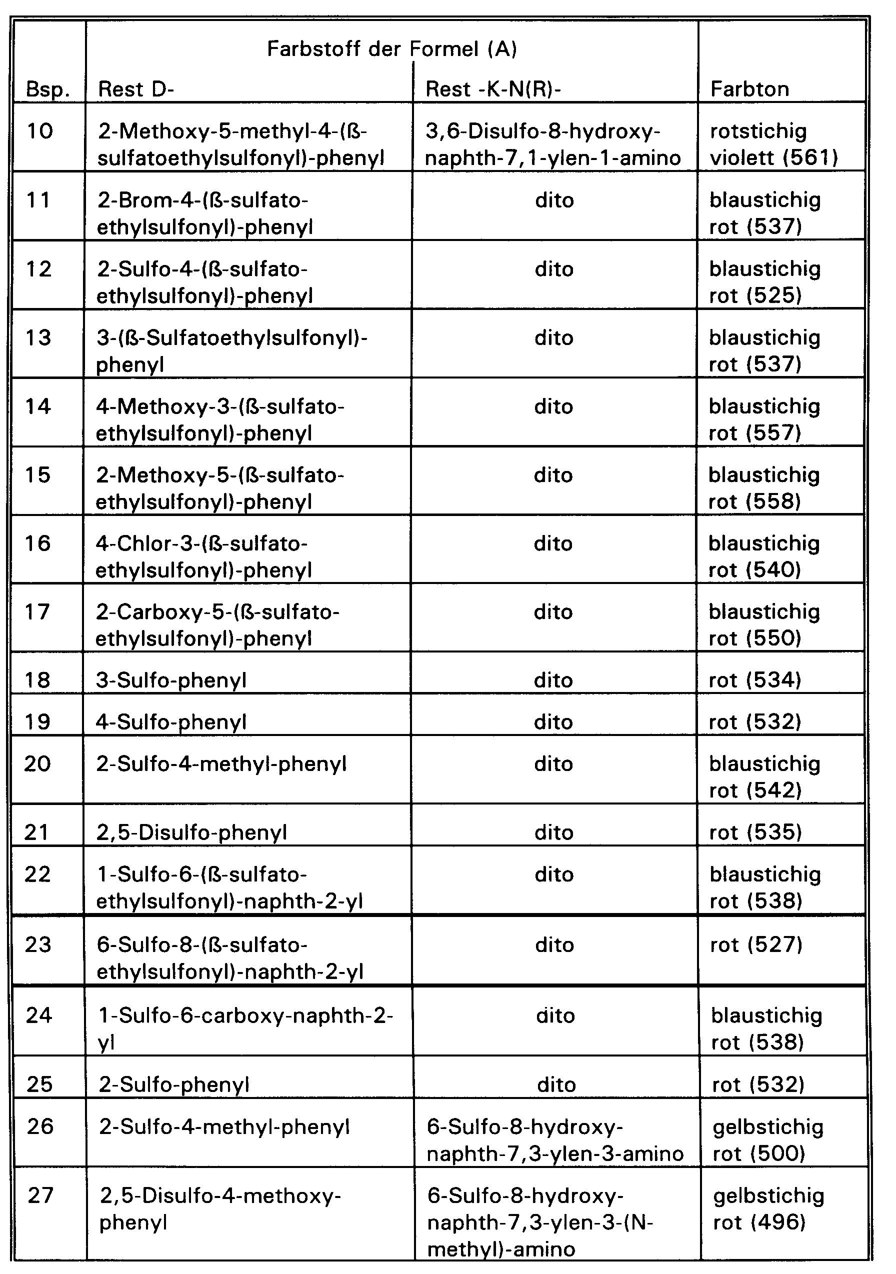

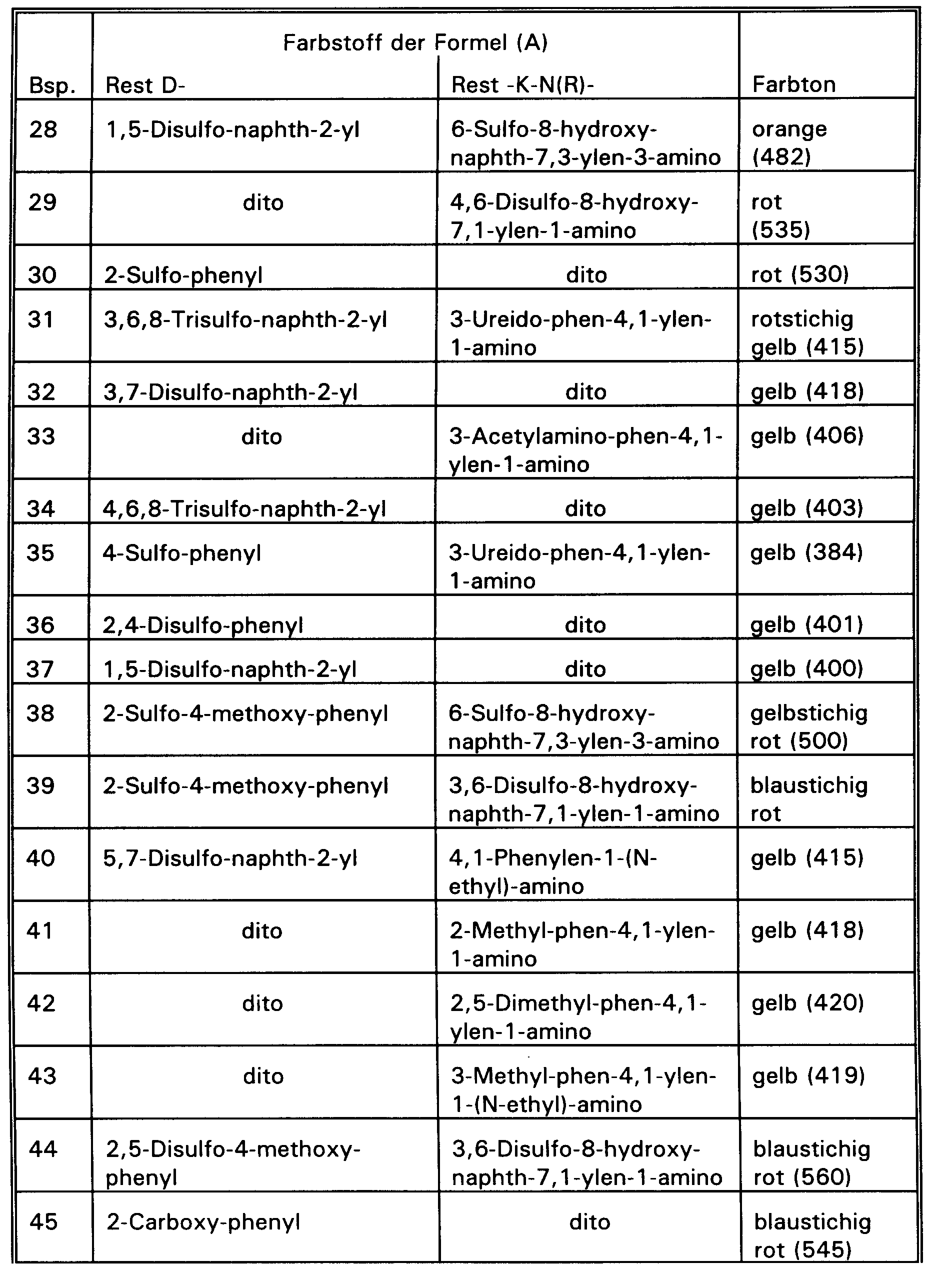

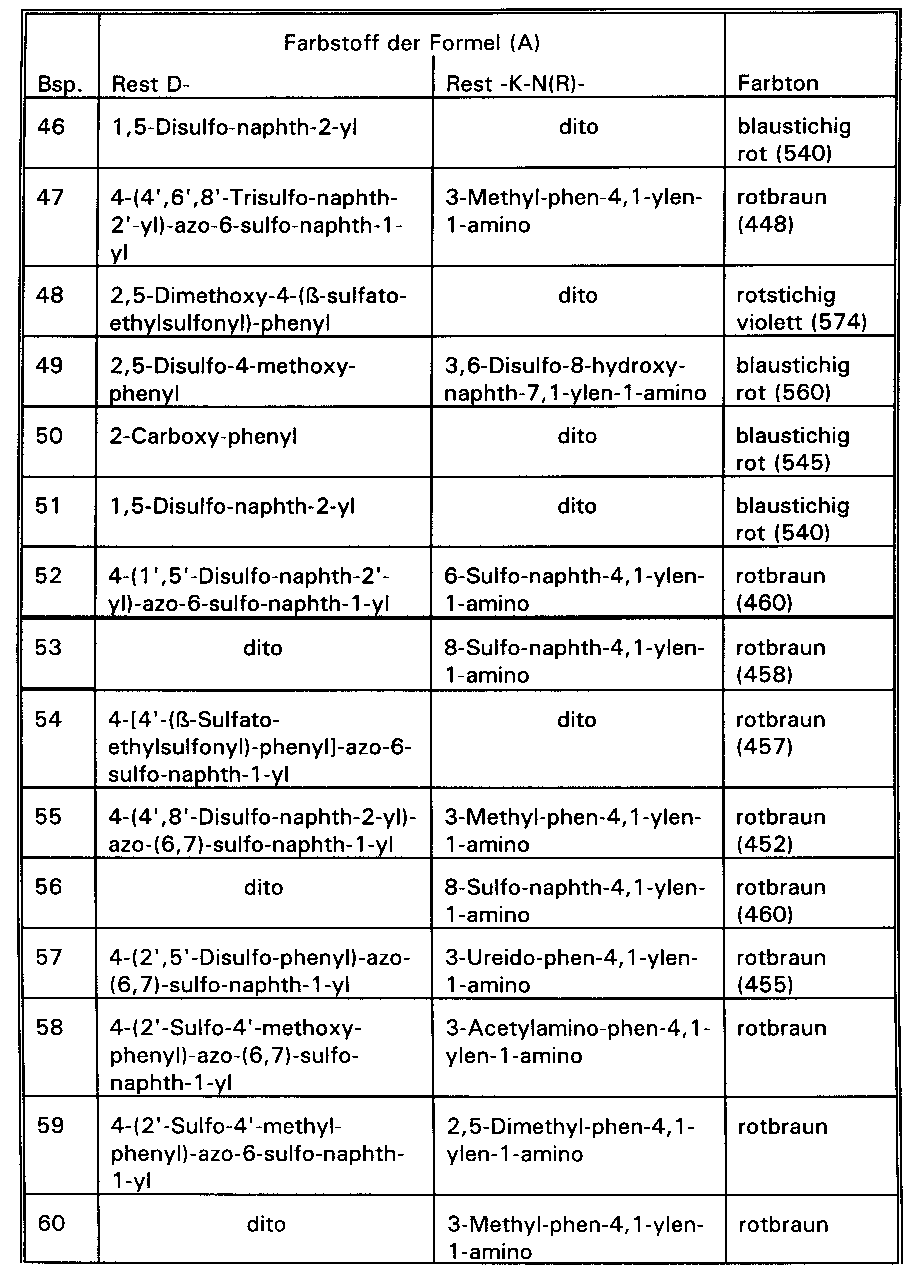

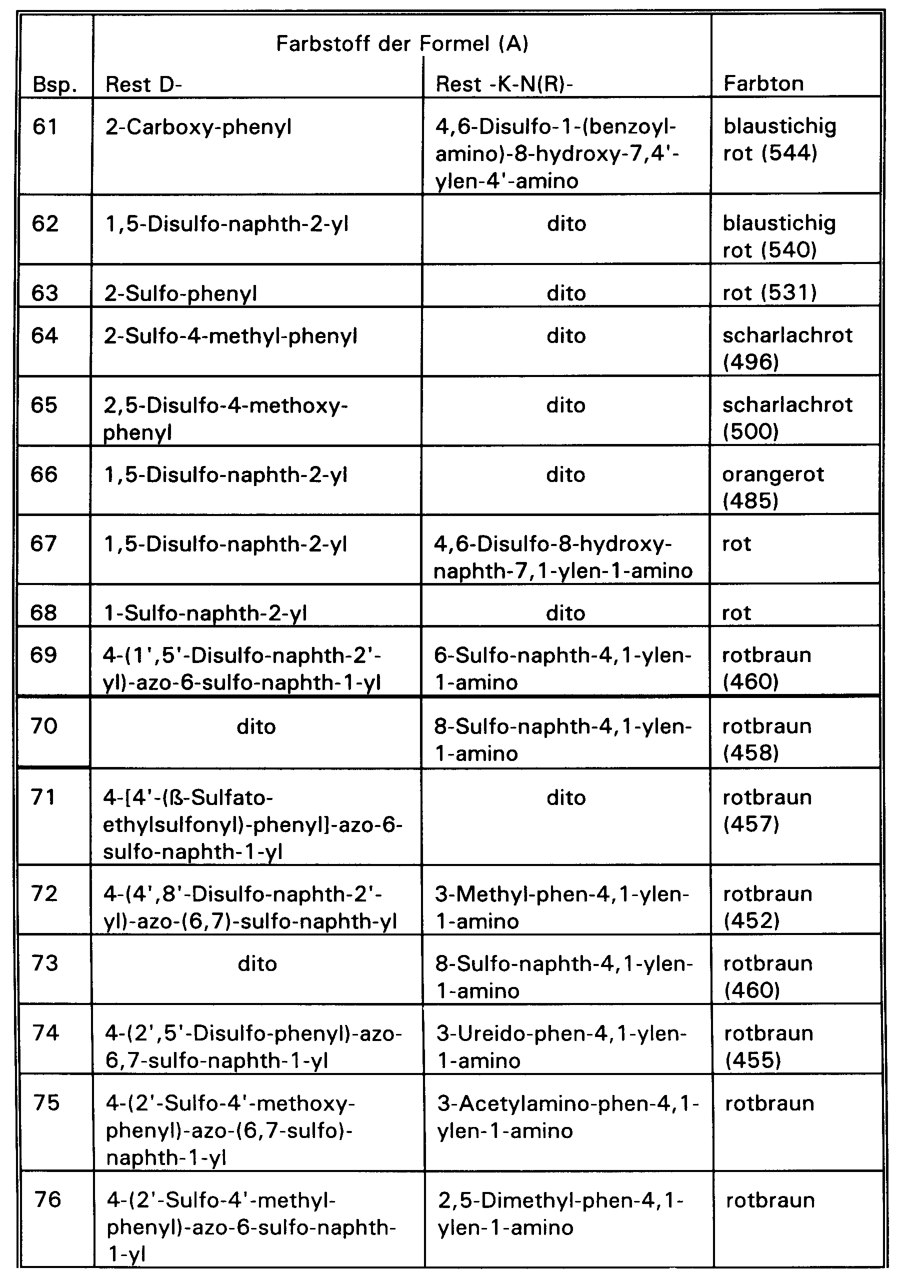

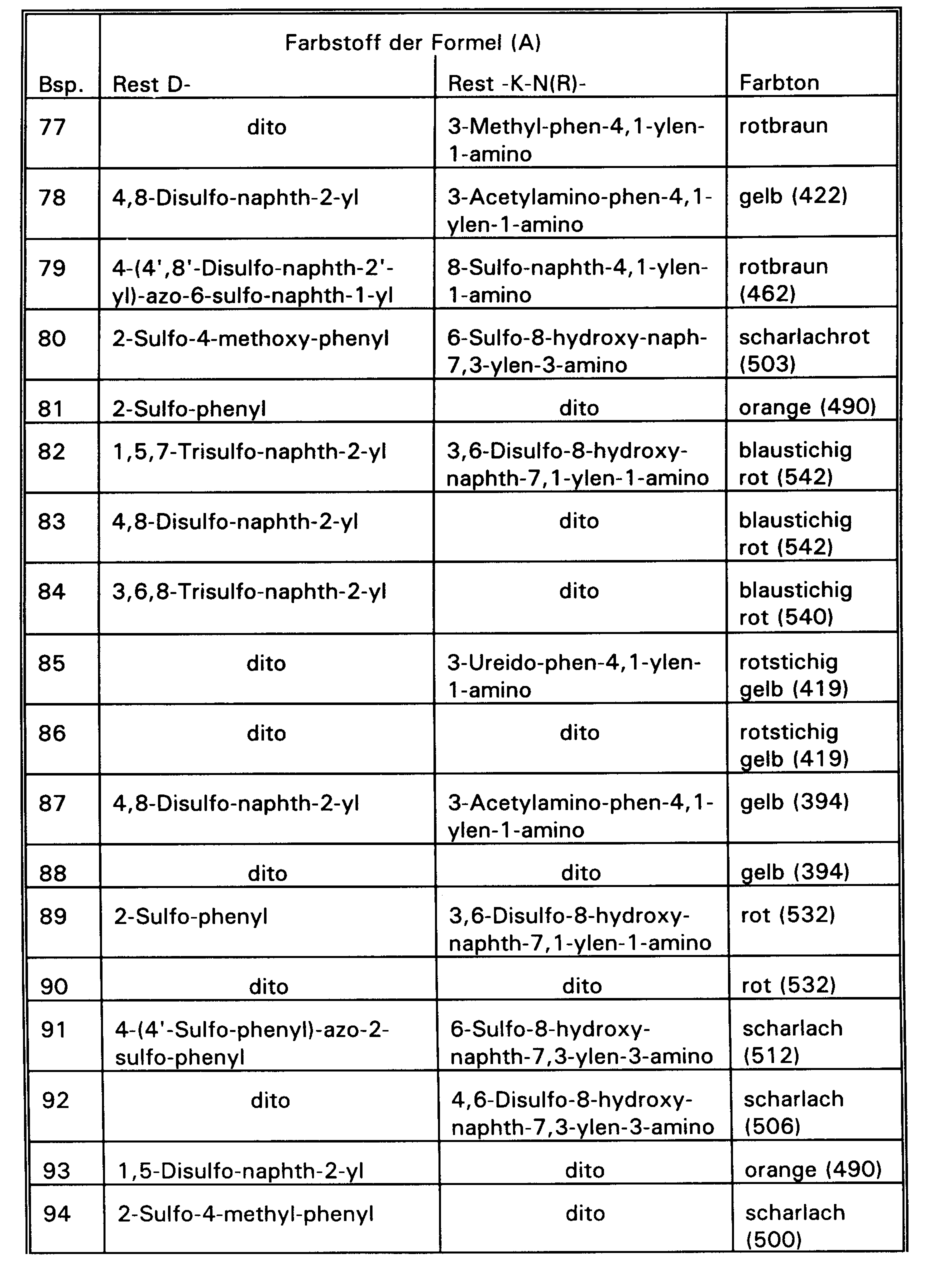

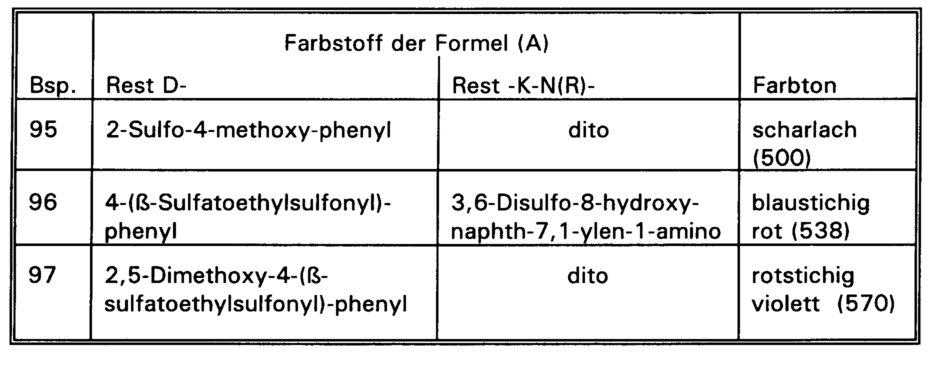

### Beispiel 98

680 Teile einer neutralen wäßrigen Lösung von 0°C von 81 Teilen der Disazoverbindung 2-[4'-(β'-Sulfatoethylsulfonyl)-phenyl]-azo-7-(2''-sulfo-5''-amino-phenyl)-azo-3,6-disulfo-1-amino-8-hydroxy-naphthalin (in üblicher Weise herstellbar durch Kupplungsreaktion von 3,6-Disulfo-1-amino-8-naphthol mit dem Diazoniumsalz von 4-(β-Sulfatoethylsulfonyl)-anilin im stark sauren Bereich und anschließende Kupplungsreaktion der erhaltenen Monoazoverbindung mit dem Monodiazoniumsalz von 1,3-Diaminobenzol-6-sulfonsäure im schwach sauren bis neutralen Bereich) in 600 Teilen Wasser werden unter Einhaltung eines pH-Wertes zwischen 6 und 7 und einer Temperatur von 40°C langsam mit 15 Teilen 4,5,6-Trifluorpyrimidin versetzt.

Nach Beendigung der Umsetzung und Zugabe von 1 Teil Dinatriumhydrogenphosphat und 3 Teilen Natriumdihydrogenphosphat isoliert den erfindungsgemäßen Disazofarbstoff durch Eindampfen der Syntheselösung, wie beispielsweise durch Sprühtrocknung. Man erhält das Alkalimetallsalz (Natriumsalz) der Verbindung der Formel

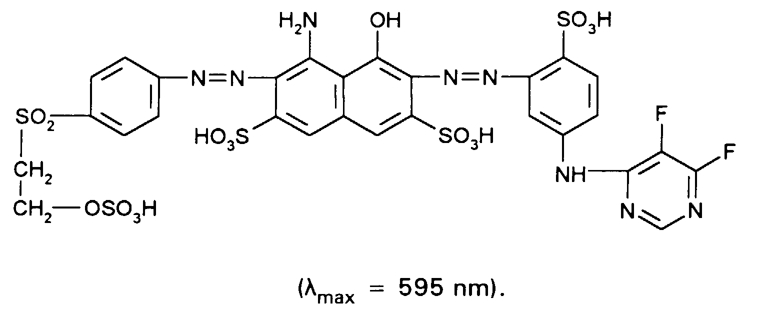

Der erfindungsgemäße Disazofarbstoff besitzt sehr gute faserreaktive Farbstoffeigenschaften und färbt nach den in der Technik für faserreaktive Farbstoffe üblichen Färbe- und Druckverfahren beispielsweise Cellulosefasermaterialien, wie Baumwolle, je nach Einsatz der Farbstoffmenge in hellblauen bis marineblauen Tönen mit guten Echtheitseigenschaften, von denen insbesondere die guten Chlorbadewasserechtheiten hervorgehoben werden können.

### Beispiel 99

a) Zu 200 Teilen einer neutralen wäßrigen Lösung von 18,8 Teilen 1,3-Diamino-benzol-4-sulfonsäure werden unter gutem Rühren bei 30 bis 35°C 13,4 Teile 4,5,6-Trifluorpyrimidin gegeben, wobei man mittels einer wäßrigen Natriumcarbonatlösung einen pH-Wert von 6,5 hält. Nach Beendigung der Umsetzung wird die erhaltene Verbindung 3-(5',6'-Difluor-pyrimidin-4'-yl)-6-sulfo-anilin nach Zugabe von Eis und 7 Teilen Natriumnitrit zu der Syntheselösung mittels 28 Teilen einer wäßrigen konzentrierten Salzsäure in üblicher Weise diazotiert.
b) Die erhaltene Diazoniumsalzsuspension gibt man bei 10 bis 15°C und einem pH-Wert von 6,0 bis 6,5 in etwa 600 Teile einer wäßrigen Lösung von 53 Teilen der Verbindung 1-Amino-8-hydroxy-3,6-disulfo-2-[4'-(β-sulfatoethylsulfonyl)-phenyl]-azo-naphthalin und führt die Kupplungsreaktion unter Einhaltung dieses pH-Wertes zu Ende.

Man isoliert den erfindungsgemäßen Disazofarbstoff der Formel (in Form der freien Säure geschrieben) 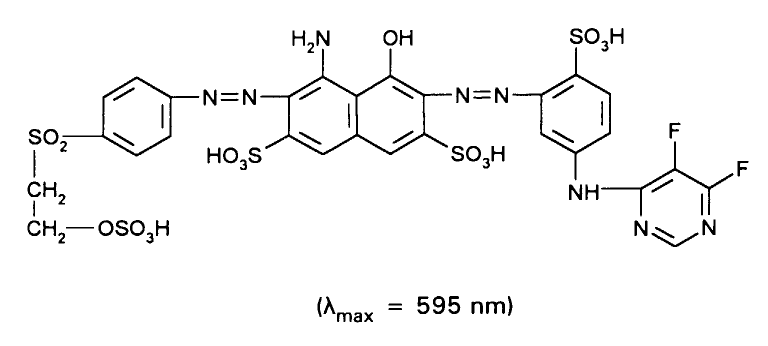 als Alkalimetallsalz (Natriumsalz) in Form eines elektrolythaltigen schwarzen Pulvers. Er zeigt sehr gute Farbstoffeigenschaften und liefert auf den in der Beschreibung genannten Materialien, wie insbesondere Cellulosefasermaterialien, marineblaue Färbungen und Drucke mit guten Echtheitseigenschaften, von denen insbesondere die Chlorbadewasserechtheit hervorgehoben werden kann.

### Beispiel 100

Zur Herstellung des erfindungsgemäßen Azofarbstoffes der Formel (in Form der freien Säure geschrieben) 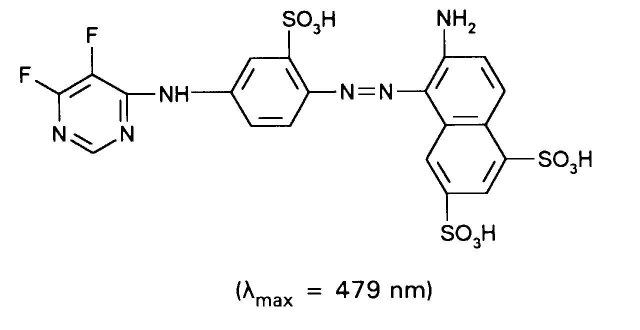 geht man von der gemäß Beispiel 99a) hergestellten Diazoniumsalzsuspension aus und rührt sie bei 0 bis 5°C in eine Lösung von 30,3 Teilen 2-Aminonaphthalin-5,7-disulfonsäure in 570 Teilen Wasser ein. Die Kupplungsreaktion erfolgt bei einer Temperatur von 20°C und einem pH-Wert von 4.

Man isoliert den erhaltenen erfindungsgemäßen Farbstoff in üblicher Weise, beispielsweise durch Aussalzen mit Natriumchlorid. Er zeigt sehr gute faserreaktive Farbstoffeigenschaften und liefert beispielsweise auf Cellulosefasermaterialien farbstarke orange Färbungen mit guten Echtheiten.

### Beispiele 101 bis 133

In den nachfolgenden Tabellenbeispielen sind weitere erfindungsgemäße Azofarbstoffe entsprechend der allgemeinen Formel (B) 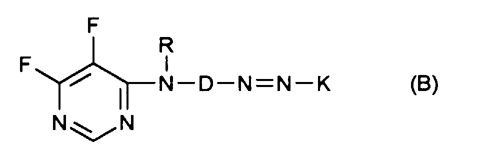 mit Hilfe der daraus ersichtlichen Komponenten beschrieben. Sie lassen sich in einer der erfindungsgemäßen Verfahrensweisen, beispielsweise analog den Angaben der Beispiele 99 und 100, durch Umsetzung der aus den Formelresten ersichtlichen Ausgangsverbindungen herstellen. Sie besitzen sehr gute faserreaktive Farbstoffeigenschaften und liefern auf den in der Beschreibung genannten Fasermaterialien, wie insbesondere Baumwolle, nach den für faserreaktiven Farbstoffe üblichen Applikations- und Fixierverfahren farbstarke Färbungen und Drucke mit dem in dem jeweiligen Tabellenbeispiel für Baumwolle angegebenen Farbton.

| Bsp. | Farbstoff der Formel (B) | | Farbton |
|---|---|---|---|
| | Rest -N(R)-D- | Rest K | |
| 101 | 6-Sulfo-phen-1,3-ylen-3-amino | 2-[3'-(β-Sulfatoethylsulfonyl)-phenyl]-azo-4,6-disulfo-1-amino-8-hydroxy-naphth-7-yl | marineblau (594) |
| 102 | dito | 2-[3'-(β-Sulfatoethylsulfonyl)-6'-methoxy-phenyl]-azo-3,6-disulfo-1-amino-8-hydroxy-naphth-7-yl | marineblau (595) |
| 103 | 2-Sulfo-phen-1,4-ylen-4-amino | 2-Amino-5,7-disulfo-naphth-1-yl | orange (479) |
| 104 | 6-Sulfo-phen-1,3-ylen-3-amino | N-Ethyl-3-aminocarbonyl-4-methyl-2-on-6-hydroxy-pyridin-5-yl | grünstichig gelb (390) |
| 105 | dito | 1,4-Dimethyl-3-sulfo-2-on-6-hydroxy-pyridin-5-yl | grünstichig gelb (410) |
| 106 | 2-Sulfo-phen-1,4-ylen-4-amino | N-Ethyl-3-cyano-4-methyl-2-on-6-hydroxy-pyridin-5-yl | rotstichig gelb (442) |
| 107 | dito | 1-(4'-Sulfophenyl)-3-carboxy-5-on-pyrazol-4-yl | gelb (417) |
| 108 | dito | 1-(4'-Sulfophenyl)-3-methyl-5-on-pyrazol-4-yl | grünstichig gelb (410) |
| 109 | 6-Sulfo-phen-1,3-ylen-3-amino | 1-[4'-(β-Sulfatoethylsulfonyl)-phenyl]-3-methyl-5-on-pyrazol-4-yl | grünstichig gelb (398) |
| 110 | 2-Sulfo-phen-1,4-ylen-4-amino | 2-[4'-(β-Sulfatoethylsulfonyl)-phenyl]-azo-3,6-disulfo-1-amino-8-hydroxy-naphth-7-yl | marineblau (600) |
| 111 | 1,4-Phenylen-4-amino | dito | marineblau (602) |
| 112 | 2,5-Disulfo-phen-1,4-ylen-4-amino | dito | marineblau (598) |
| 113 | 1,3-Phenylen-3-amino | dito | marineblau (596) |
| 114 | 2,5-Disulfo-phen-1,4-ylen-4-amino | dito | marineblau (598) |
| 115 | 1,3-Phenylen-3-amino | dito | marineblau (597) |
| 116 | 1-Sulfo-naphth-2,4-ylen-4-amino | dito | marineblau (596) |
| 117 | 1-Sulfo-naphth-2,5-ylen-5-amino | dito | marineblau (598) |
| 118 | 2,5-Disulfo-phen-1,4-ylen-4-amino | 2-Amino-5,7-disulfo-naphth-1-yl | orange (487) |
| 119 | 6-Sulfo-phen-1,3-ylen-3-amino | N-Ethyl-3-aminocarbonyl-4-methyl-2-on-6-hydroxy-pyridin-5-yl | gelb (424) |
| 120 | dito | 1,4-Dimethyl-3-sulfo-2-on-6-hydroxy-pyridin-5-yl | grünstichig gelb (410) |
| 121 | 2-Sulfo-phen-1,4-ylen-4-amino | N-Ethyl-3-cyano-4-methyl-2-on-6-hydroxy-pyridin-5-yl | rotstichig gelb (442) |
| 122 | dito | 1-(4'-Sulfophenyl)-3-carboxy-5-on-pyrazol-4-yl | gelb (417) |
| 123 | dito | 1-(4'-Sulfophenyl)-3-methyl-5-on-pyrazol-4-yl | grünstichig gelb (410) |
| 124 | 6-Sulfo-phen-1,3-ylen-3-amino | 1-[4'-(β-Sulfatoethylsulfonyl)-phenyl]-3-methyl-5-on-pyrazol-4-yl | grünstichig gelb (398) |
| 125 | dito | 2-(2',5'-Disulfophenyl)-azo-3,6-disulfo-1-amino-8-hydroxy-naphth-7-yl | marineblau (600) |
| 126 | dito | 2-(4'-Sulfophenyl)-azo-3,6-disulfo-1-amino-8-hydroxy-naphth-7-yl | marineblau (597) |
| 127 | dito | 3,6-Disulfo-1-(N-benzoylamino)-8-hydroxy-naphth-7-yl | rot (537) |
| 128 | dito | 4,6-Disulfo-1-(N-benzoylamino)-8-hydroxynaphth-7-yl | scharlach |
| 129 | dito | 3,6-Disulfo-1-(N-acetylamino)-8-hydroxy-naphth-7-yl | rot (525) |
| 130 | 1-Sulfo-naphth-2,5-ylen-5-methylenamino | 3,6-Disulfo-1-(N-benzoylamino)-8-hydroxy-naphth-7-yl | rot (544) |
| 131 | dito | 4,6-Disulfo-1-(N-benzoylamino)-8-hydroxynaphth-7-yl | rot (513) |
| 132 | 6-Sulfo-phen-1,3-ylen-3-amino | 2-[4'-(β-Sulfatoethylsulfonyl)-phenyl]-azo-4,6-disulfo-1-amino-8-hydroxy-naphth-7-yl | marineblau (594) |
| 133 | dito | 2-[3'-(β-Sulfatoethylsulfonyl)-phenyl]-azo-3,6-disulfo-1-amino-8-hydroxy-naphth-7-yl | marineblau (595) |

### Beispiel 134

In 560 Teile einer wäßrigen Suspension von 54,5 Teilen N-(2-Carboxy-5-sulfo-phenyl)-N'-(2'-hydroxy-3'-amino-5'-sulfo-phenyl)-ms-phenylformazan rührt man unter Einhaltung eines pH-Wertes von 7,0 bis 7,5 bei 25°C 5,3 Vol.-Teile 4,5,6-Trifluoropyrimidin ein und rührt die Reaktionsmischung sodann bei diesem pH-Bereich bei einer Temperatur von 40°C noch mehrere Stunden weiter. Die Syntheselösung wird anschließend mittels Aktivkohle und einem Filtrierhilfsmittel in üblicher Weise geklärt.

Der erfindungsgemäße Kupferformazanfarbstoff der Formel (in Form der freien Säure geschrieben) 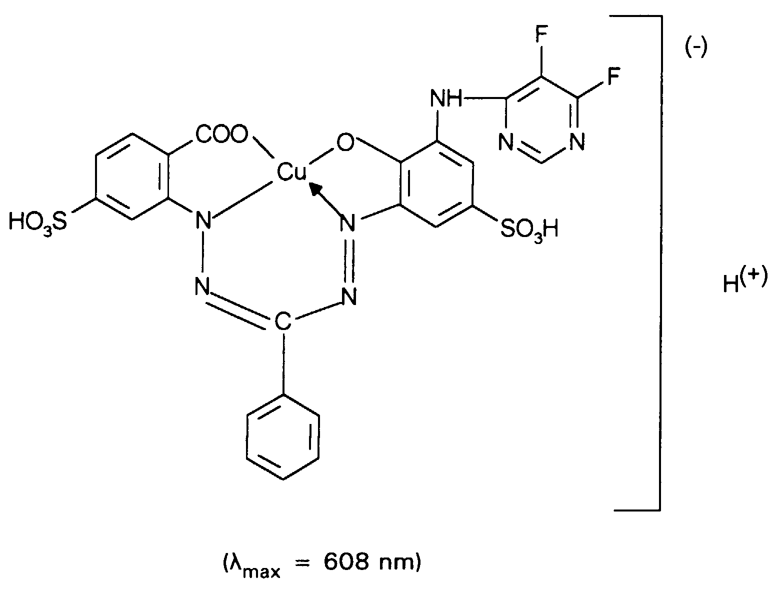 wird aus der Syntheselösung durch Natriumchlorid ausgesalzen. Er färbt beispielsweise Baumwolle nach den in der Technik für faserreaktive Farbstoffe üblichen Färbeweisen in farbstarken, blauen Tönen mit guten Echtheiten.

### Beispiel 135

Eine neutrale Lösung von 26,5 Teilen 1-Amino-4-(2',4',6'-trimethyl-3'-amino-phenylamino)-anthrachinon-2,5'-disulfonsäure wird unter gutem Rühren bei 40 bis 50°C und unter Einhaltung eines pH-Wertes von 6 bis 7 mit 7,1 Teilen 4,5,6-Trifluorpyrimidin versetzt. Man rührt noch einige Zeit unter Einhaltung des pH-Wertes von 6 bis 7 bis zur Beendigung der Umsetzung nach und isoliert sodann den erfindungsgemäßen Anthrachinonfarbstoff der Formel (in Form der freien Säure geschrieben) 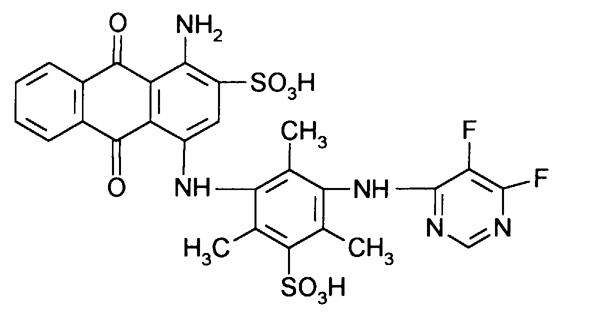 durch Aussalzen aus der Syntheselösung mittels Kaliumchlorid. Er zeigt sehr gute faserreaktive Farbstoffeigenschaften und färbt die in der Beschreibung genannten Materialien, wie beispielsweise Cellulosefasermaterialien, in brillanten blauen Tönen mit guten Echtheitseigenschaften.

### Beispiel 136

In eine neutrale Lösung von 41,9 Teilen 1-Amino-4-(3'-amino-2'-methyl-5'-sulfo-phenylamino)-anthrachinon in 500 Teilen Wasser rührt man bei 25°C 15,4 Teilen 4,5,6-Trifluorpyrimidin ein und hält hierbei den pH-Wert mittels wäßriger Natriumcarbonatlösung bei 6 bis 7. Man rührt unter Einhaltung dieses pH-Bereiches den Reaktionsansatz noch einige Zeit bei 40 bis 50°C und isoliert den erfindungsgemäßen Anthrachinonfarbstoff durch Aussalzen mittels Natriumchlorid, Filtration und Nachwaschen mit 10 %iger wäßriger Natriumchloridlösung in üblicher Weise. Er besitzt, in Form der freien Säure geschrieben, die Formel 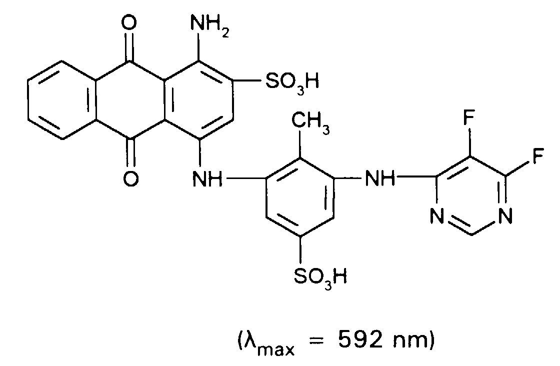 und färbt die in der Beschreibung genannten Fasermaterialien, wie insbesondere Baumwolle, nach den für faserreaktive Farbstoffe üblichen Färbe- und Druckverfahren in einem neutralen Blauton.

### Beispiel 137

Man verfährt zur Herstellung des erfindungsgemäßen Anthrachinonfarbstoffes der Formel (in Form der freien Säure geschrieben) 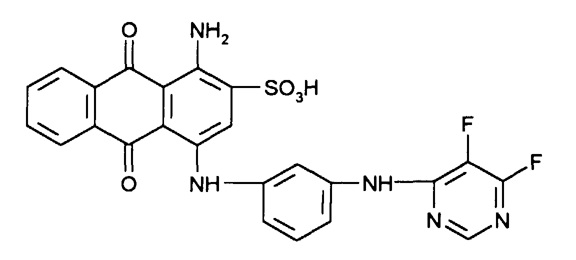 gemäß der Verfahrensweise des Beispieles 134 mit der Ausnahme, daß man anstelle der dort angegebenen Amino-anthrachinon-Ausgangsverbindung von 19,8 Teilen 1-Amino-4-(3'-aminophenyl-amino)-anthrachinon-2-sulfonsäure ausgeht.
Der erfindungsgemäße Anthrachinonfarbstoff zeigt ebenfalls sehr gute faserreaktive Farbstoffeigenschaften und färbt beispielsweise Baumwolle nach den in der Technik für faserreaktive Farbstoffe üblichen Färbe- und Druckverfahren in echten, farbstarken blauen Tönen.

### Beispiel 138

Man verfährt zur Herstellung des erfindungsgemäßen Anthrachinonfarbstoffes gemäß der Verfahrensweise des Beispieles 135 mit der Ausnahme, daß man anstelle der dort angegebenen Amino-anthrachinon-Ausgangsverbindung von der Verbindung 1-Amino-4-[4'-(N-methyl)-aminomethylen-2'-sulfo-phenyl]-amino-anthrachinon-2-sulfonsäure in äquivalenter Menge ausgeht. Der erfindungsgemäße Anthrachinonfarbstoff zeigt ebenfalls sehr gute faserreaktive Farbstoffeigenschaften und färbt beispielsweise Baumwolle nach den in der Technik für faserreaktive Farbstoffe üblichen Färbe- und Druckverfahren in echten, farbstarken blauen Tönen.

### Beispiel 139

a) 18,8 Teile 2,4-Diaminobenzolsulfonsäure werden in 80 Teilen Wasser durch Neutralisation mit 10 %iger wäßriger Natriumhydroxidlösung gelöst und bei 25 bis 40°C mit 15,4 Teilen 4,5,6-Trifluorpyrimidin bei einem pH-Wert zwischen 5,5 und 6,0 umgesetzt. Nach Beendigung der Reaktion gibt man 19,3 Teile Cyanurchlorid hinzu und rührt den Ansatz bei 20 bis 25°C und bei einem pH-Wert von 5,0 weiter. Sobald sich keine diazotierbare Aminogruppe mehr nachweisen läßt, ist die Umsetzung abgeschlossen. Man erhält eine Lösung oder dickflüssige Suspension der Verbindung 2-(2',4'-Dichlor-1',3',5'-triazin-6'-yl)-amino-4-(5'',6''-difluor-pyrimidin-4''-yl)-amino-benzolsulfonsäure als Natriumsalz.
b) 46,5 Teile 1-Amino-(2'-aminomethyl-4'-methyl-6'-sulfo-phenylamino)-anthrachinon-2-sulfonsäure werden in 300 Teilen Wasser unter Zugabe von 10 Teilen Caprolactam bei einem pH-Wert von 7 und einer Temperatur von 70°C gelöst. Nach Abkühlen des Ansatzes auf Raumtemperatur gibt man die unter a) hergestellte Lösung hinzu und rührt den Ansatz unter Einhaltung eines pH-Wertes von 6,0 bis 6,5 mittels wäßriger 10 %iger Natriumcarbonat- oder Lithiumhydroxid-Lösung mehrere Stunden weiter. Nach Beendigung der Umsetzung wird der erfindungsgemäße Anthrachinonfarbstoff aus der erhaltenen Lösung mittels Natriumchlorid ausgesalzen, abgesaugt, mit 20 %iger wäßriger Natriumchloridlösung gewaschen und bei 50°C unter reduziertem Druck getrocknet.

Der erfindungsgemäße Farbstoff besitzt, in Form der freien Säure geschrieben, die Formel

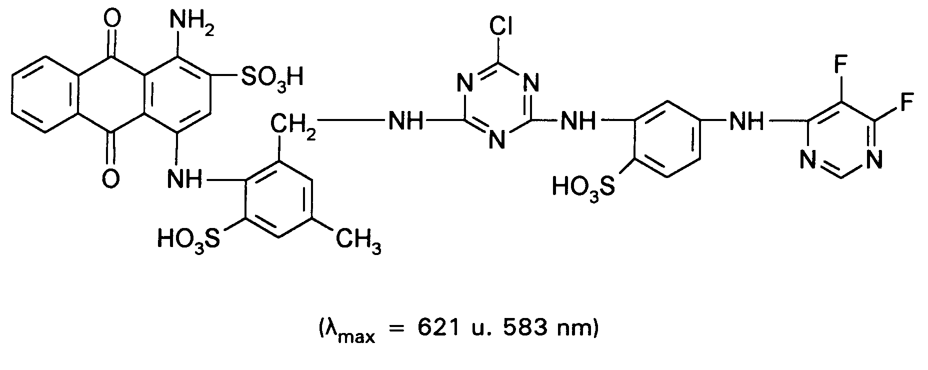

Er färbt beispielsweise Baumwolle und Zellwolle nach den in der Technik bekannten Druck- und Färbeverfahren in brillanten rotstichigen Blautönen mit hoher Fixierausbeute und hervorragenden Naßechtheiten.

### Beispiel 140

Zur Herstellung eines erfindungsgemäßen Anthrachinonfarbstoffes verfährt man gemäß der Verfahrensweise des Beispieles 139, setzt jedoch anstelle des Cyanurchlorids 14,2 Teile Cyanurfluorid ein und führt dessen Umsetzung bei einem pH-Wert von 4,5 bis 5,0 und einer Temperatur zwischen 0 und 5°C und anschließend die Reaktion der erhaltenen Difluortriazinylamino-Verbindung mit der Anthrachinon-Ausgangsverbindung bei 0 bis 10°C und einem pH-Wert von 6,0 durch.

Man erhält den erfindungsgemäßen Anthrachinonfarbstoff der Formel (in Form der freien Säure geschrieben) 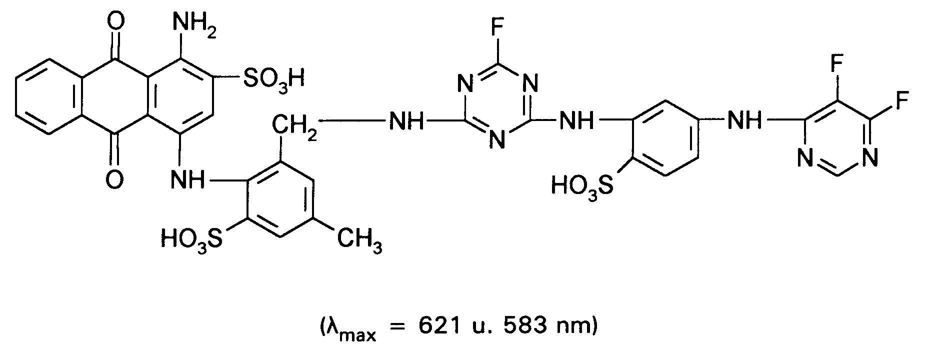 der nach den in der Technik für faserreaktive Farbstoffe üblichen Anwendungsverfahren beispielsweise Cellulosefasermaterialien, wie Baumwollgewebe, in hohen Fixierausbeuten und brillanten blauen Tönen mit guten Echtheiten färbt.

### Beispiel 141

Zur Herstellung eines erfindungsgemäßen Anthrachinonfarbstoffes verfährt man gemäß der Verfahrensweise des Beispieles 140, indem man die gemäß Beispiel 140 hergestellte wäßrige Lösung oder Suspension des Kondensationsproduktes aus 18,8 Teilen 2,4-Diaminobenzolsulfonsäure, 15,4 Teilen 4,5,6-Trifluor-pyrimidin und 14, 2 Teilen Cyanurfluorid in eine neutrale Lösung von 41,9 Teilen 1-Amino-4-(3'-amino-2'-methyl-5'-sulfo-phenylamino)-anthrachinon-2-sulfonsäure in 500 Teilen Wasser von 10 bis 15°C einrührt und die Umsetzung unter Einhaltung eines pH-Wertes von 5,5 bis 6,0 mittels 10%iger wäßriger Natriumcarbonatlösung durchführt.

Der erfindungsgemäße Anthrachinonfarbstoff der Formel (in Form der freien Säure geschrieben) 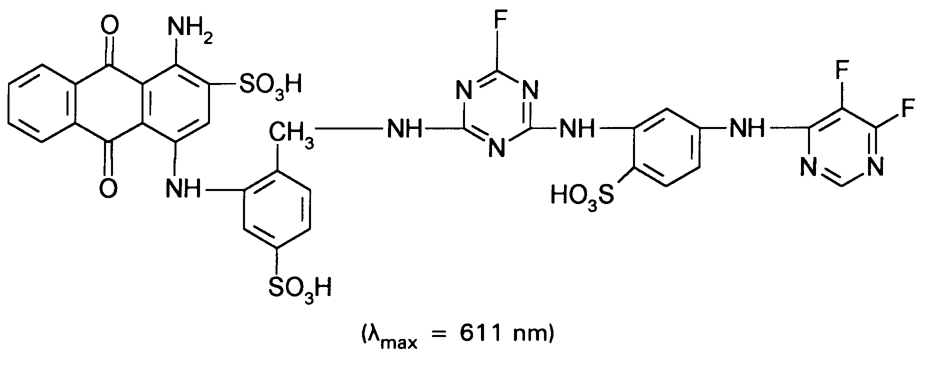 wird in üblicher Weise mittels Natriumchlorid ausgesalzen, abgesaugt und mit 10 %iger wäßriger Natriumchloridlösung gewaschen und getrocknet. Er färbt beispielsweise Baumwolle nach den üblichen Färbeverfahren für faserreaktive Farbstoffe in neutralen blauen Tönen.

### Beispiel 142

Unter gutem Rühren gibt man in eine neutrale Lösung von 65 Teilen der Ausgangsverbindung 1,6-Disulfo-2,7-di-(γ-amino-propylamino)-5,10-dichlor-triphendioxazin in 500 Teilen Wasser bei 40°C 25 Teile 4,5,6-Trifluorpyrimidin und hält hierbei den pH-Wert bei etwa 6 mittels einer wäßrigen 2N Natriumhydroxid-lösung aufrecht.
Der erhaltene erfindungsgemäße Triphendioxazinfarbstoff wird in üblicher Weise durch Aussalzen mit Natriumchlorid aus der Syntheselösung isoliert. Er besitzt, in Form der freien Säure geschrieben, die Formel 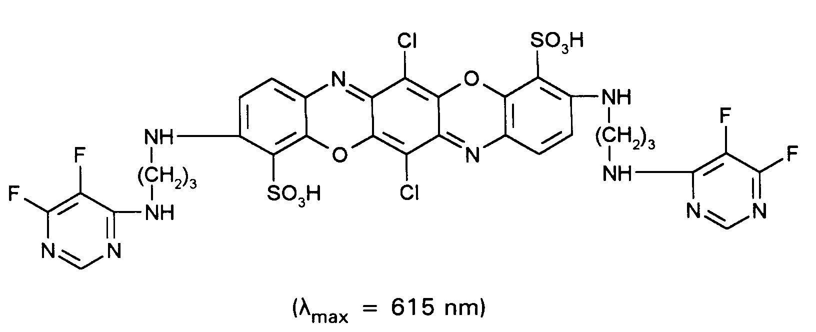 und färbt die in der Beschreibung genannten Fasermaterialien, wie insbesondere Cellulosefasermaterialien, nach den in der Technik für faserreaktive Farbstoffe üblichen Applikations- und Fixierverfahren in farbstarken, blauen Tönen mit guten Echheitseigenschaften.

### Beispiel 143

Zur Herstellung eines erfindungsgemäßen Triphendioxazinfarbstoffes verfährt man gemäß den Angaben des Beispieles 137, setzt jedoch anstelle der dort angegebenen Ausgangsverbindung die Verbindung 1,6-Disulfo-2,7-di-(β-amino-ethylamino)-5,10-dichlor-triphendioxazin in äquivalenter Menge ein. Der Farbstoff zeigt ebenfalls sehr gute faserreaktive Farbstoffeigenschaften und färbt beispielsweise Baumwolle in blauen Tönen. In wäßriger Lösung besitzt er ein Absorptionsmaximum bei 614 nm.

### Beispiel 144

Eine neutrale Lösung von 50,3 Teilen der Verbindung 3-(m-Amino-phenyl-aminosulfonyl)-kupferphthalocyanin-3',3'',3'''-trisulfonsäure in 500 Teilen Wasser wird bei 35°C unter Einhaltung eines pH-Wertes von 6 bis 7 innerhalb von etwa 30 Minuten mit 5,2 Teilen 4,5,6-Trifluorpyrimidin versetzt. Man rührt unter Einhaltung dieser Verfahrensbedingungen noch einige Zeit nach und isoliert sodann den erfindungsgemäßen Kupferphthalocyaninfarbstoff der Formel (in Form der freien Säure geschrieben) 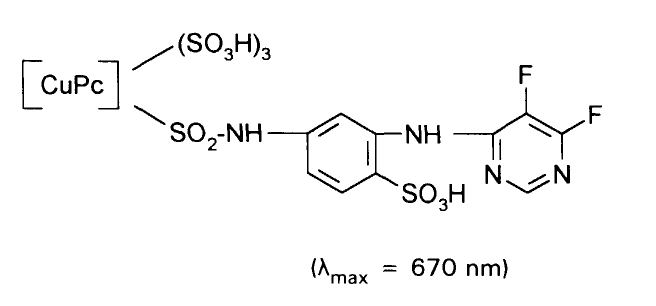 aus der Syntheselösung durch Aussalzen mit Natriumchlorid. Er färbt beispielsweise Baumwolle, Zellwolle und Regeneratcellulose in farbstarken, türkisblauen, echten Tönen.

### Beispiel 145

302 Teile 2-Brom-1-amino-naphthalin-4-sulfonsäure werden in 2000 Teilen Wasser gelöst, in üblicher Weise diazotiert und in eine Suspension von 467,5 Teilen 6-(4',5'-Difluor-pyrimidin-6'-yl)-amino-4,8-disulfo-1-hydroxy-naphthalin in 3500 Teilen Wasser unter kräftigem Rühren zufließen lassen, wobei man gleichzeitig mit einer 20 %igen wäßrigen Natriumcarbonatlösung (etwa 800 Teile) ein pH-Bereich zwischen 7 und 8 aufrecht hält.
Die erhaltene Suspension des roten Kupplungsproduktes wird langsam unter Aufrechterhaltung eines pH-Wertes zwischen 7 und 8 mit 275 Teilen 2-Amino-benzoesäure und danach mit 1380 Teilen einer 18 %igen wäßrigen Kupfersulfatlösung versetzt. Man rührt noch einige Stunden nach, filtriert die Reaktionslösung und isoliert den erfindungsgemäßen Kupferformazanfarbstoff der Formel (in Form der freien Säure geschrieben) 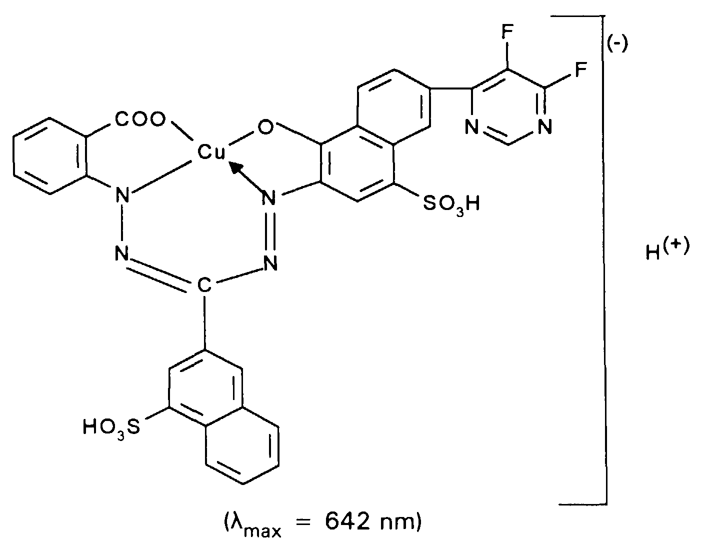 duch Aussalzen als Alkalimetallsalz (Natriumsalz). Der Farbstoff zeigt gute färberische Eigenschaften und liefert beispielsweise auf Cellulosefasermaterialien, wie Baumwolle, farbstarke grüne Färbungen und Drucke von sehr hohen Echtheiten.

### Beispiel 146

20,3 Teile 3-Amino-4-methoxy-benzolsulfonsäure werden in üblicher Weise diazotiert. Zu der erhaltenen wäßrigen Lösung (etwa 200 Teile) des Diazoniumsalzes gibt man 15,3 Teile 3,4-Dimethoxy-anilin, stellt danach einen pH-Wert von weniger als 4 ein und führt die Kupplungsreaktion in diesem sauren pH-Bereich zu Ende. Die ausgefallen Azoverbindung wird abgesaugt. Etwa 80 Teile der so erhaltenen wasserhaltigen Raste dieser Aminoazoverbindung werden in 150 Teile Wasser bei einem pH-Wert von etwa 8 gelöst, und die Aminoazoverbindung wird in üblicher Weise diazotiert. Die erhaltene Lösung (etwa 500 Teile) des Diazoniumsalzes wird sodann unter Rühren langsam in eine mit 150 Vol.-Teile einer 20 %igen wäßrigen Natriumcarbonatlösung vermischten neutralen Lösung von 24 Teilen 6-Amino-1-hydroxy-naphthalin-3-sulfonsäure in etwa 250 Teilen Wasser eingerührt. Nach beendeter Kupplung zur Disazoverbindung wird die Syntheselösung mit einer ammoniakalischen wäßrigen Kupfersulfatlösung versetzt, die 25 Teile Kupfersulfat-Pentahydrat enthält. Man rührt etwa 1 bis 2 Stunden bei 95°C und salzt anschließend den erhaltenen Kupferkomplexfarbstoff bei Raumtemperatur mittels Natriumchlorid aus. Die Verbindung wird durch Absaugen auf einen Filter isoliert und die erhaltene wasserhaltige Raste danach in etwa 1000 Teilen Wasser gelöst und unter gutem Rühren mit 18 Teilen 4,5,6-Trifluor-pyrimidin versetzt. Man rührt noch mehrere Stunden bei 25 bis 35°C unter Einhaltung eines pH-Wertes zwischen 6 und 7 nach und isoliert den erfindungsgemäßen Kupferkomplexfarbstoff der Formel (in Form der freien Säure) 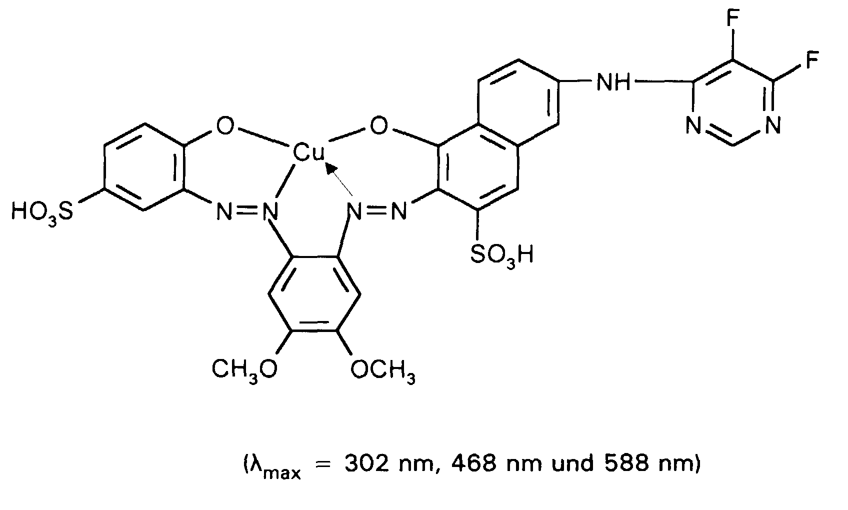 durch Aussalzen mittels Natriumchlorid. Der erfindungsgemäße Kupferkomplexfarbstoff zeigt sehr gute färberische Eigenschaften und liefert auf den in der Beschreibung genannten Fasermaterialien, wie insbesondere Cellulosefasermaterialien, nach den in der Technik für faserreaktive Farbstoffe üblichen Färbe- und Druckmethoden farbstarke Färbungen und Drucke in olivfarbenen Tönen.

### Beispiel 147

Zur Herstellung eines erfindungsgemäßen Azofarbstoffes verfährt man gemäß der Verfahrensweise des Beispieles 8b), indem man zunächst 15,2 Teile 2,4-Diaminobenzolsulfonsäure-mono-natriumsalz mit 12 Teilen 4,5,6-Trifluorpyrimidin und anschließend das erhaltene Kondensationsprodukt mit 10 Teilen Trifluor-s-triazin umsetzt.
Zu der erhaltenen Lösung des sekundären Kondensationsproduktes rührt man bei 0°C unter Einhaltung eines pH-Wertes von 6,0 bis 6,2 30 Teile der Azoverbindung 3-(2'-Sulfo-5'-amino-phenyl)-azo-4-methyl-5-sulfomethyl-N-methyl-2-hydroxy-pyridin-6-on in Form einer neutralen wäßrigen Lösung und führt die Umsetzung unter Einhaltung eines pH-Wertes von 7,0 mittels 20%iger wäßriger Natriumcarbonatlösung zunächst bei etwa 10°C, anschließend im Verlaufe von drei Stunden unter Erwärmung auf 25°C durch.

Der erfindungsgemäße Azofarbstoff wird in üblicher Weise durch Aussalzen mit Natriumchlorid isoliert. Er besitzt, in Form der freien Säure geschrieben, die Formel 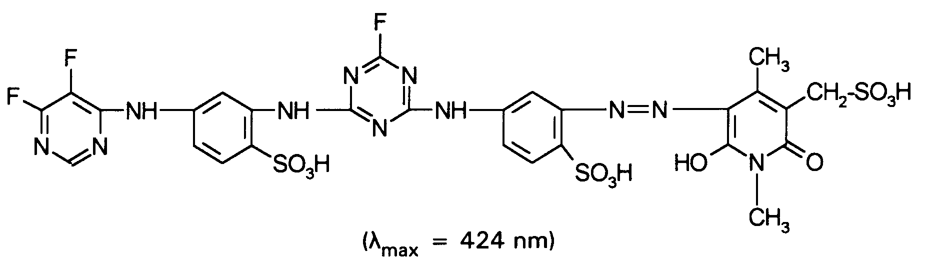 und färbt beispielsweise Baumwolle nach üblichen Färbeverfahren für faserreaktive Farbstoffe in brillianten grünstichig gelben Tönen.

## Patentansprüche

1. Farbstoff entsprechend der allgemeinen Formel (1)
Fb―Zₙ (1)
in welcher bedeuten:
Fb ist der Rest eines sulfogruppenhaltigen Mono-, Dis- oder Polyazofarbstoffes oder Schwermetallkomplex-Mono-, -Dis- oder - Trisazofarbstoffes oder Anthrachinon-, Azomethin-, Phenazin-, Stilben-, Triphenylmethan-, Xanthen-, Thioxanthen-, Nitroaryl-, Naphthochinon-, Pyrenchinon-, Perylentetracarbimid-, Formazan-, Kupferformazan-, Phthalocyanin-, Kupferphthalocyanin-, Nickelphthalocyanin-, Kobaltphthalocyanin-, Aluminiumphthalocyanin- oder Triphendioxazin-Farbstoffes;
n ist die Zahl 1, 2 oder 3;
Z ist eine Gruppe der allgemeinen Formel (2) 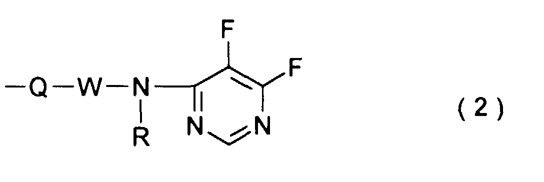 in welcher
Q eine kovalente Bindung oder eine Gruppe der Formel 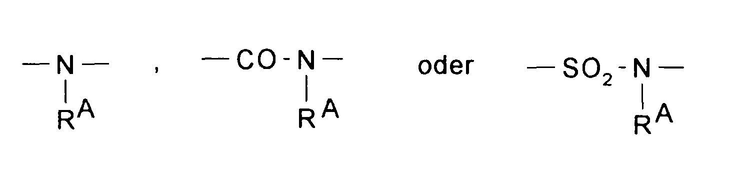 ist, in welchen
R^{A} Wasserstoff oder Alkyl von 1 bis 4 C-Atomen ist, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo, Sulfato oder Phosphato substituiert sein kann,
W eine kovalente Bindung oder ein Brückenglied ist, wobei jedoch Q zwingend eine kovalente Bindung bedeutet, falls W für eine kovalene Bindung steht und wobei die Aminogruppen -N(R^{A})- und -N(R)- an ein C-Atom des Brückengliedes W oder an ein C-Atom eines Substituenten von W gebunden sind, und
R Wasserstoff oder Alkyl von 1 bis 4 C-Atomen ist, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo, Sulfato oder Phosphato substituiert sein kann.

2. Farbstoff nach Anspruch 1, dadurch gekennzeichnet, daß Fb der Rest eines sulfogruppenhaltigen Mono- oder Disazofarbstoffes ist.

3. Farbstoff nach Anspruch 1, dadurch gekennzeichnet, daß Fb der Rest eines 1:1-Kupferkomplex-Mono- oder Disazofarbstoffes ist.

4. Farbstoff nach Anspruch 1, dadurch gekennzeichnet, daß Fb der Rest eines Anthrachinonfarbstoffes ist.

5. Farbstoff nach Anspruch 1, dadurch gekennzeichnet, daß Fb der Rest eines Kupferformazan-Farbstoffes ist.

6. Farbstoff nach Anspruch 1, dadurch gekennzeichnet, daß Fb der Rest eines Aluminiumphthalocyanin-, Kupferphthalocyanin- oder Nickelphthalocyanin-Farbstoffes ist.

7. Farbstoff nach Anspruch 1, dadurch gekennzeichnet, daß Fb der Rest eines Triphendioxazinfarbstoffes ist.

8. Farbstoff nach mindestens einem der Ansprüche 1 bis 7, dadurch gekennzeichnet, daß Q eine direkte Bindung oder eine Gruppe der Formel -N(R^{A})- ist.

9. Farbstoff nach Anspruch 8, dadurch gekennzeichnet, daß R^{A} Wasserstoff ist.

10. Farbstoff nach mindestens einem der Ansprüche 1 bis 9, dadurch gekennzeichnet, daß n die Zahl 1 ist.

11. Farbstoff nach mindestens einem der Ansprüche 1 bis 10, dadurch gekennzeichnet, daß R Wasserstoff ist.

12. Farbstoff nach mindestens einem der Ansprüche 1 bis 7, 10 und 11, dadurch gekennzeichnet, daß Q und W beide eine kovalente Bindung darstellen.

13. Farbstoff nach einem oder mehreren der Ansprüche 1 bis 11, dadurch gekennzeichnet, daß W geradkettiges oder verzweigtes Alkylen von 1 bis 6 C-Atomen ist oder Alkylen von 2 bis 8 C-Atomen ist, das durch 1 oder 2 Heterogruppen aus der Gruppe -NH- , -N(R^{A})- mit R^{A} der in Anspruch 1 genannten Bedeutung, -SO₂- , -CO- , -O- , -NH-SO₂- , -SO₂-NH- , -CO-NH- und -NH-CO- unterbrochen ist, oder gegebenenfalls substituiertes Arylen oder gegebenenfalls substituiertes Arylen-alkylen oder ein zwei Arylenreste enthaltender Rest ist, dessen Arylenreste über eine kovalente Bindung, eine Heterogruppe oder einen Alkylenrest von 1 bis 4 C-Atomen oder einen olefinischen Rest von 2 bis 4 C-Atomen miteinander verbunden sind, oder der bivalente Rest eines Heterocyclus ist, an den der bivalente Rest eines gegebenenfalls substituierten Phenylen-amino-, Phenylen-methylen-amino-, Naphthylen-amino- oder (C₁-C₆)-Alkylen-amino-Restes gebunden sein kann.

14. Farbstoff nach Anspruch 13, dadurch gekennzeichnet, daß W ein Rest der allgemeinen Formel (a) 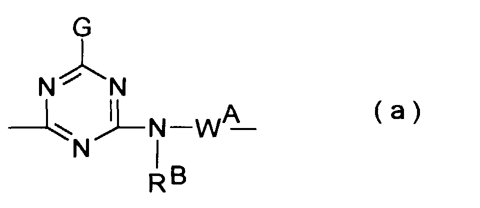 ist, in welcher
G Fluor, Chlor, Brom, Cyanoamino, gegebenenfalls substituiertes Amino, Hydroxy, Alkoxy von 1 bis 4 C-Atomen, Phenoxy, gegebenenfalls durch 1 oder 2 Substituenten aus der Gruppe Sulfo, Carboxy, Methyl, Ethyl, Methoxy und Ethoxy substituiertes Phenoxy oder Alkylthio von 1 bis 4 C-Atomen ist,
R^{B} Wasserstoff oder Alkyl von 1 bis 4 C-Atomen ist, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo, Sulfato oder Phosphato substituiert sein kann, und
W^{A} geradkettiges Alkylen von 2 bis 6 C-Atomen oder verzweigtes Alkylen von 3 bis 6 C-Atomen ist, die jeweils durch eine oder zwei Heterogruppen unterbrochen sind, welche aus den Gruppen der Formeln -O- , -CO- , -SO₂-, -NH- , -N(R^{A}) mit R^{A} einer der in Anspruch 1 genannten Bedeutungen, -NH-CO- , -CO-NH- , -SO₂-NH- und -NH-SO₂- ausgewählt sind, oder Phenylen ist, das durch 1 oder 2 Substituenten aus der Gruppe Sulfo, Carboxy, Methyl, Ethyl, Methoxy und Ethoxy substituiert sein kann.

15. Verfahren zur Herstellung eines Farbstoffes der allgemeinen Formel (1) von Anspruch 1, dadurch gekennzeichnet, daß man für den jeweiligen Farbstoff typische Vorprodukte, von denen mindestens eines eine oder zwei Gruppen der allgemeinen Formel (2) enthält, miteinander umsetzt, oder daß man eine Verbindung der allgemeinen Formel (20) 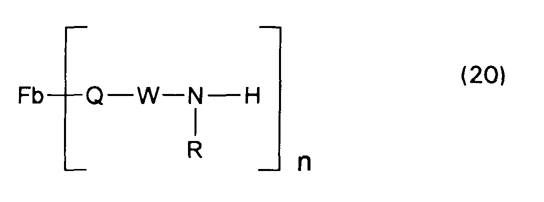 mit Fb, Q, W, R und n der in Anspruch 1 genannten Bedeutung in äquivalenter Menge mit 4,5,6-Trifluor-pyrimidin umsetzt, oder daß man eine Verbindung der allgemeinen Formel Fb-N(R^{A})H mit Fb und R^{A} der obengenannten Bedeutung mit einer Verbindung der allgemeinen Formel (21) 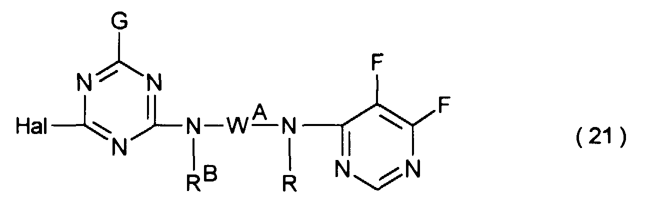 in welcher Hal für Halogen steht und G, R^{B}, W^{A} und R die obengenannten Bedeutungen haben, umsetzt, oder daß man eine Verbindung der allgemeinen Formel (22) 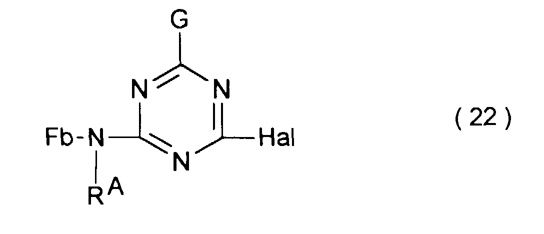 mit Fb, R^{A}, G und Hal der obengenannten Bedeutung mit einer Verbindung der allgemeinen Formel (23) 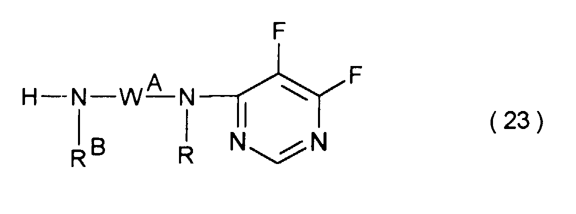 mit R^{B}, W^{A} und R der obengenannten Bedeutung umsetzt.

16. Verwendung eines Farbstoffes von Anspruch 1 oder eines nach Anspruch 15 hergestellten Farbstoffes zum Färben von hydroxy- und/oder carbonamidgruppenhaltigem Material, insbesondere Fasermaterial.

17. Verfahren zum Färben von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff einen Farbstoff von Anspruch 1 oder einen nach Anspruch 15 hergestellten Farbstoff einsetzt.
